# EUROPEAN PATENT APPLICATION

(11) **EP 4 180 950 A1**
(43) Date of publication of application: **17.05.2023**
(21) Application number: 21849530.7
(22) Date of filing: 28.07.2021
(51) Int. Cl.: G06F 9/451

(54) **TEXT DISPLAY METHOD, COMPILATION METHOD AND RELATED DEVICE**

(30) Priority: 31.07.2020 CN 202010761001
(71) Applicant: Huawei Technologies Co., Ltd., Shenzhen, Guangdong 518129 (CN)
(72) Inventor: LI, Wei, Shenzhen, Guangdong 518129 (CN); JIANG, Shishuang, Shenzhen, Guangdong 518129 (CN)
(74) Representative: Goddar, Heinz J.
(86) International application number: PCT/CN2021/108859
(87) International publication number: WO 2022/022554

(57) **Abstract**

A text display method, a compilation method, and a related device are provided. In the method, a lite device may find a corresponding shaped first glyph index set by using a number of a first static text that needs to be displayed; search a glyph index-based font library by using the first glyph index set, to obtain a correct first glyph set obtained after a character string of the first static text is shaped; and directly display the first glyph set. According to the technical solutions provided in this application, during running, the lite device can correctly display a glyph in a complex language without shaping a text in the complex language. This improves a capability of the lite device to support the complex language.

## Description

This application claims priority to Chinese Patent Application No. 202010761001.3, filed with the China National Intellectual Property Administration on July 31, 2020 and entitled "TEXT DISPLAY METHOD, COMPILATION METHOD, AND RELATED DEVICE", which is incorporated herein by reference in its entirety.

### TECHNICAL FIELD

This application relates to the field of terminals and communications technologies, and in particular, to a text display method, a compilation method, and a related device.

### BACKGROUND

To deliver electronic devices in different countries and regions, the electronic devices need to support a plurality of languages. However, processing manners of different languages are different. There may be basically two types of languages. One type is simple languages. To be specific, one character corresponds to one Unicode (universal multiple octet coded, Unicode), characters of a text can be directly indexed and displayed by using Unicode, and language texts have no deformation. The simple languages are represented by Chinese, English, and French. The other type is complex languages. To be specific, one character may have a plurality of types of deformation in different statements, one Unicode may correspond to a plurality of glyphs, and shaping measures such as glyph substitution or syllable substitution need to be performed on the language texts based on statements or context semantics. The complex languages are represented by Arabic, Thai, Burmese, and the like.

Currently, when a language is processed, a rich device with a large read-only memory (read-only memory, ROM) and a large random access memory (random access memory, RAM), for example, an electronic device using an Android system, usually obtains a vector glyph directly by using a Unicode index vector font library during running, and then renders and completely shapes the vector glyph, to display a correct text.

However, a resource capability of a lite device with only a megabyte (MByte, MB)-level ROM and a kilobyte (KByte, KB)-level RAM, for example, a microcontroller unit (microcontroller unit, MCU) or a single-chip microcomputer, cannot render and completely shape a vector font library during running. The lite device uses a dot-matrix font library, that is, renders the vector font library into the dot-matrix font library in a compilation phase, so that each Unicode corresponds to a dot matrix of a character. In addition, the lite device indexes the dot-matrix font library by using Unicode during running, to obtain and display a corresponding glyph. However, because the lite device cannot support complete shaping during running, syntax of a text displayed when the lite device processes a complex language does not conform to a syntax habit of the complex language, and consequently a user using the language cannot identify the language.

### SUMMARY

This application provides a text display method, a compilation method, and a related device, to improve a capability of a lite device to support a complex language.

According to a first aspect, this application provides a compilation method, including: obtaining a text resource file, where the text resource file includes a correspondence between a text number and a character string of a text; performing text shaping on a character string of a first static text in the text resource file, to obtain a first glyph index set, where the text shaping is used to determine a correct glyph corresponding to a character in the character string of the text; and generating, based on a correspondence between a number of the first static text and the character string of the first static text in the text resource file, a static text glyph index file that includes a correspondence between the number of the first static text and the first glyph index set. The first glyph index set includes one or more unique glyph indices, and each unique glyph index has a glyph uniquely corresponding to the unique glyph index.

In the foregoing embodiment, a compilation device performs text shaping on the character string of the first static text in the text resource file, to obtain the static text glyph index file that includes the correspondence between the number of the first static text and the first glyph index set, so that a device that uses the static text glyph index file can obtain a corresponding glyph index set based on the number of the static text. The glyph index-based font library is searched based on the glyph index set, to display a correct glyph that is of the static text and on which text shaping is performed. Text shaping does not need to be performed each time the static text is displayed. This reduces power consumption of the device that uses the static text glyph index file, and improves a capability of the device that uses the static text glyph index file to support a complex language.

With reference to some embodiments of the first aspect, in some embodiments, the method further includes: converting a vector font library into a glyph index-based font library. The glyph index-based font library is used to search, by using a unique glyph index, for a glyph uniquely corresponding to the unique glyph index.

In the foregoing embodiment, the compilation device may convert, in a compilation phase, a common vector font library indexed by using coded Unicode into the glyph index-based font library indexed by using the unique glyph index, to support accurate search for a corresponding glyph by using the unique glyph index, without a need to temporarily determine, based on a context and semantics, which glyph of a character needs to be used. This improves efficiency of searching for the correct glyph.

With reference to some embodiments of the first aspect, in some embodiments, the performing text shaping on a character string of a first static text in the text resource file, to obtain a first glyph index set specifically includes: inputting a coded character set corresponding to the character string of the first static text into a text shaping algorithm library, to obtain the first glyph index set. The text shaping algorithm library uses a first glyph index-based font library, the first glyph index set includes one or more unique glyph indices, and each unique glyph index has a glyph uniquely corresponding to the unique glyph index in the first glyph index-based font library.

In the foregoing embodiment, text shaping is performed on the character string of the first static text by using the text shaping algorithm library. This improves efficiency and accuracy of performing text shaping.

With reference to some embodiments of the first aspect, in some embodiments, before the step of performing text shaping on a character string of a first static text in the text resource file, to obtain a first glyph index set, the method further includes: extracting the first static text from the text resource file.

In the foregoing embodiment, the compilation device may first extract a static text that meets a requirement and needs to be shaped, to facilitate subsequent shaping. This improves efficiency of shaping the static text by the compilation device.

With reference to some embodiments of the first aspect, in some embodiments, before the step of performing text shaping on a character string of a first static text in the text resource file, to obtain a first glyph index set, the method further includes: determining a character string of a static text in the text resource file based on a first format character. The character string of the static text includes the character string of the first static text.

In the foregoing embodiment, the compilation device may determine the static text in the text resource file based on the first format character. This is convenient, facilitates identification by the compilation device, and improves efficiency of determining the static text by the compilation device.

With reference to some embodiments of the first aspect, in some embodiments, the character string of the text in the text resource file includes character strings of texts in a plurality of different language types. The first static text is a text in one complex language. The complex language is of a language type in which one character corresponding to one coded character sethas a plurality of glyphs. The generating, based on a correspondence between a number of the first static text and the character string of the first static text in the text resource file, a static text glyph index file that includes a correspondence between the number of the first static text and the first glyph index set specifically includes: generating, based on a correspondence among the number of the first static text, a language type of the first static text, and the character string of the first static text in the text resource file, a static text glyph index file that includes a correspondence among the number of the first static text, the language type of the first static text, and the first glyph index set.

In the foregoing embodiment, when the text resource file includes character strings of texts in a plurality of language types, the compilation device may perform text shaping processing only on a static text in a complex language in the text resource file, and generate the static text glyph index file that includes the correspondence among the number of the first static text, the language type of the first static text, and the first glyph index set. This reduces processing load of the compilation device, and improves a degree of supporting a plurality of complex languages by the device that uses the static text glyph index file.

With reference to some embodiments of the first aspect, in some embodiments, the text resource file is a text resource file used by a system of a lite device. The method further includes: storing the static text glyph index file in a system directory of the lite device.

In the foregoing embodiment, the compilation device stores the static text glyph index file in the system directory of the lite device, so that all programs in the lite device can directly use the static text glyph index file. This improves running efficiency of the device that uses the static text glyph index file.

With reference to some embodiments of the first aspect, in some embodiments, the text resource file is a text resource file used by a first application in the lite device. The method further includes: storing the static text glyph index file in a directory of the first application in the lite device.

In the foregoing embodiment, an application may have a static text glyph index file that is independently used. This improves space for personalized setting of the device that uses the static text glyph index file, and also improves freedom of a developer developing an application.

With reference to some embodiments of the first aspect, in some embodiments, the text resource file is a text resource file obtained from a network server. The method further includes: storing the static text glyph index file in the network server.

In the foregoing embodiment, the compilation device stores the static text glyph index file in the network server, so that each device that needs to use the static text glyph index file can directly obtain the static text glyph index file from the network server. This reduces difficulty in obtaining the static text glyph index file by another developer, and facilitates sharing and use of the static text glyph index file.

According to a second aspect, an embodiment of this application provides a compilation device. The compilation device includes an input apparatus, an output apparatus, a processor, and a memory. The memory is coupled to the processor. The memory is configured to store computer program code. The computer program code includes computer instructions. The processor invokes the computer instructions, so that the compilation device performs the following operations: obtaining a text resource file, where the text resource file includes a correspondence between a text number and a character string of a text; performing text shaping on a character string of a first static text in the text resource file, to obtain a first glyph index set, where the text shaping is used to determine a correct glyph corresponding to a character in the character string of the text; and generating, based on a correspondence between a number of the first static text and the character string of the first static text in the text resource file, a static text glyph index file that includes a correspondence between the number of the first static text and the first glyph index set. The first glyph index set includes one or more unique glyph indices, and each unique glyph index has a glyph uniquely corresponding to the unique glyph index.

In the foregoing embodiment, a compilation device performs text shaping on the character string of the first static text in the text resource file, to obtain the static text glyph index file that includes the correspondence between the number of the first static text and the first glyph index set, so that a device that uses the static text glyph index file can obtain a corresponding glyph index set based on the number of the static text. The glyph index-based font library is searched based on the glyph index set, to display a correct glyph that is of the static text and on which text shaping is performed. Text shaping does not need to be performed each time the static text is displayed. This reduces power consumption of the device that uses the static text glyph index file, and improves a capability of the device that uses the static text glyph index file to support a complex language.

With reference to some embodiments of the second aspect, in some embodiments, the one or more processors are further configured to invoke the computer instructions, so that the compilation device performs the following operation: converting a vector font library into a glyph index-based font library. The glyph index-based font library is used to search, by using a unique glyph index, for a glyph uniquely corresponding to the unique glyph index.

With reference to some embodiments of the second aspect, in some embodiments, the one or more processors are specifically configured to invoke the computer instructions, so that the compilation device performs the following operation: inputting a coded character set corresponding to the character string of the first static text into a text shaping algorithm library, to obtain the first glyph index set. The text shaping algorithm library uses a first glyph index-based font library, the first glyph index set includes one or more unique glyph indices, and each unique glyph index has a glyph uniquely corresponding to the unique glyph index in the first glyph index-based font library.

With reference to some embodiments of the second aspect, in some embodiments, the one or more processors are further configured to invoke the computer instructions, so that the compilation device performs the following operation: extracting the first static text from the text resource file.

With reference to some embodiments of the second aspect, in some embodiments, the one or more processors are further configured to invoke the computer instructions, so that the compilation device performs the following operation: determining a character string of a static text in the text resource file based on a first format character. The character string of the static text includes the character string of the first static text.

With reference to some embodiments of the second aspect, in some embodiments, the character string of the text in the text resource file includes character strings of texts in a plurality of different language types. The first static text is a text in one complex language. The complex language is of a language type in which one character corresponding to one coded character set has a plurality of glyphs. The one or more processors are specifically configured to invoke the computer instructions, so that the compilation device performs the following operation: generating, based on a correspondence among the number of the first static text, a language type of the first static text, and the character string of the first static text in the text resource file, a static text glyph index file that includes a correspondence among the number of the first static text, the language type of the first static text, and the first glyph index set.

According to a third aspect, an embodiment of this application provides a chip system. The chip system is applied to a compilation device, the chip system includes one or more processors, and the processor is configured to invoke computer instructions, so that the compilation device performs the method according to any one of the first aspect and the possible implementations of the first aspect.

According to a fourth aspect, an embodiment of this application provides a computer program product including instructions. When the computer program product runs on a compilation device, the compilation device is enabled to perform the method according to any one of the first aspect and the possible implementations of the first aspect.

According to a fifth aspect, an embodiment of this application provides a computer-readable storage medium, including instructions. When the instructions are run on a compilation device, the compilation device is enabled to perform the method according to any one of the first aspect and the possible implementations of the first aspect.

It may be understood that the compilation device according to the second aspect, the chip system according to the third aspect, the computer program product according to the fourth aspect, and the computer storage medium according to the fifth aspect are all configured to perform the compilation method provided in embodiments of this application. Therefore, for beneficial effects that can be achieved, refer to beneficial effects in a corresponding method. Details are not described herein again.

According to a sixth aspect, this application provides a text display method. The method includes: A lite device determines a first glyph index set based on a number of a first static text. The lite device searches a glyph index-based font library by using the first glyph index set, to obtain a first glyph set. The glyph index-based font library is used to search, by using a unique glyph index, for a glyph uniquely corresponding to the unique glyph index. The lite device displays the first glyph set.

In the foregoing embodiment, the lite device may determine a corresponding shaped first glyph index set by using the number of the first static text that needs to be displayed; search the glyph index-based font library by using the first glyph index set, to obtain a correct first glyph set obtained after the first static text is shaped; and directly display the first glyph set. A glyph in a complex language can be correctly displayed without shaping a text in the complex language. This improves a capability of the lite device to support the complex language.

With reference to some embodiments of the sixth aspect, in some embodiments, the lite device has only one static text glyph index file, and the static text glyph index file includes a correspondence between the number of the first static text and the first glyph index set. That a lite device determines a first glyph index set based on a number of a first static text specifically includes: The lite device searches the static text glyph index file by using the number of the first static text, to determine the first glyph index set corresponding to the number of the first static text.

In the foregoing embodiment, the lite device has only one static text glyph index file, so that the lite device uniformly searches for a glyph index set corresponding to the number of the static text. This improves efficiency of determining a correct glyph index set by the lite device.

With reference to some embodiments of the sixth aspect, in some embodiments, that the lite device searches the static text glyph index file by using the number of the first static text, to determine the first glyph index set corresponding to the number of the first static text specifically includes: The lite device invokes a static text interface of a graphics engine by using the number of the first static text, to determine the first glyph index set corresponding to the number of the first static text.

In the foregoing embodiment, the lite device may invoke the static text interface of the graphics engine, to determine the first glyph index set corresponding to the number of the first static text, and execute a dedicated function by using a dedicated module. This improves execution efficiency of the lite device.

With reference to some embodiments of the sixth aspect, in some embodiments, the lite device has a plurality of static text glyph index files, and different static text glyph index files store correspondences between numbers of different static texts and glyph index sets.

In the foregoing embodiment, the lite device may store the plurality of static text glyph index files, so that application development on the lite device is more flexible.

With reference to some embodiments of the sixth aspect, in some embodiments, that a lite device determines a first glyph index set based on a number of a first static text specifically includes: The lite device determines, based on a value range plan or a parameter plan of a text number, that the number of the first static text belongs to a first static text glyph index file. The lite device searches the first static text glyph index file by using the number of the first static text, to determine the first glyph index set corresponding to the number of the first static text.

In the foregoing embodiment, the static text glyph index file to which the number of the static text belongs may be determined by using the value range plan or the parameter plan of the text number. This improves efficiency of finding a correct static text glyph index file.

With reference to some embodiments of the sixth aspect, in some embodiments, that a lite device determines a first glyph index set based on a number of a first static text specifically includes: The lite device searches each static text glyph index file by using the number of the first static text, to determine that the number of the first static text belongs to a first static text glyph index file, and determine the first glyph index set corresponding to the number of the first static text.

In the foregoing embodiment, the static text glyph index file to which the number of the static text belongs may be determined by searching each static text glyph index file. This simplifies a step of finding the correct static text glyph index file, and reduces complexity of a running process of the lite device.

With reference to some embodiments of the sixth aspect, in some embodiments, the lite device stores a correspondence between the number of the static text and a text type parameter, and different text type parameters correspond to different static text glyph index files. That a lite device determines a first glyph index set based on a number of a first static text specifically includes: The lite device determines a first parameter corresponding to the number of the first static text. The first parameter corresponds to the first static text glyph index file. The lite device searches the first static text glyph index file by using the number of the first static text, to determine the first glyph index set corresponding to the number of the first static text.

In the foregoing embodiment, the static text glyph index file to which the number of the static text belongs may be determined by using the correspondence between the number of the static text and the text type parameter. This improves accuracy of finding the correct static text glyph index file.

With reference to some embodiments of the sixth aspect, in some embodiments, that the lite device searches the first static text glyph index file by using the number of the first static text, to determine the first glyph index set corresponding to the number of the first static text specifically includes: The lite device invokes a first static text interface of a graphics engine by using the number of the first static text, to determine the first glyph index set corresponding to the number of the first static text. The first static text interface is a static text interface that is in a plurality of static text interfaces of the graphics engine and that corresponds to the first static text glyph index file.

In the foregoing embodiment, different static text glyph index files may respectively correspond to different static text interfaces in the plurality of static text interfaces of the graphics engine. This improves efficiency of invoking a static text interface in the graphics engine to find a corresponding glyph index set.

With reference to some embodiments of the sixth aspect, in some embodiments, before the step of in which a lite device determines a first glyph index set based on a number of a first static text, the method further includes: The lite device determines that a number of a to-be-displayed text is the number of the static text.

With reference to some embodiments of the sixth aspect, in some embodiments, the to-be-displayed text is a text bound to a to-be-displayed component. That the lite device displays the first glyph set specifically includes: The lite device displays the first glyph set in the to-be-displayed component to which the number of the first static text is bound.

According to a seventh aspect, this application provides a lite device. The lite device includes one or more processors, a memory, and a display. The memory is coupled to the one or more processors. The memory is configured to store computer program code. The computer program code includes computer instructions. The one or more processors invoke the computer instructions, so that the lite device performs the following operations: determining a first glyph index set based on a number of a first static text; searching a glyph index-based font library by using the first glyph index set, to obtain a first glyph set, where the glyph index-based font library is used to search, by using a unique glyph index, for a glyph uniquely corresponding to the unique glyph index; and displaying the first glyph set.

In the foregoing embodiment, the lite device may determine a corresponding shaped first glyph index set by using the number of the first static text that needs to be displayed; search the glyph index-based font library by using the first glyph index set, to obtain a correct first glyph set obtained after the first static text is shaped; and directly display the first glyph set. A glyph in a complex language can be correctly displayed without shaping a text in the complex language. This improves a capability of the lite device to support the complex language.

With reference to some embodiments of the seventh aspect, in some embodiments, the lite device has only one static text glyph index file. The static text glyph index file includes a correspondence between the number of the first static text and the first glyph index set. The one or more processors are specifically configured to invoke the computer instruction, so that the lite device performs the following operation: searching the static text glyph index file by using the number of the first static text, to determine the first glyph index set corresponding to the number of the first static text.

With reference to some embodiments of the seventh aspect, in some embodiments, the one or more processors are specifically configured to invoke the computer instruction, so that the lite device performs the following operation: invoking a static text interface of a graphics engine by using the number of the first static text, to determine the first glyph index set corresponding to the number of the first static text.

With reference to some embodiments of the seventh aspect, in some embodiments, the lite device has a plurality of static text glyph index files, and different static text glyph index files store correspondences between numbers of different static texts and glyph index sets.

With reference to some embodiments of the seventh aspect, in some embodiments, the one or more processors are specifically configured to invoke the computer instructions, so that the lite device performs the following operations: determining, based on a value range plan or a parameter plan of a text number, that the number of the first static text belongs to a first static text glyph index file; and searching the static text glyph index file by using the number of the first static text, to determine the first glyph index set corresponding to the number of the first static text.

With reference to some embodiments of the seventh aspect, in some embodiments, the one or more processors are specifically configured to invoke the computer instructions, so that the electronic device performs the following operation: searching each static text glyph index file by using the number of the first static text, to determine that the number of the first static text belongs to a first static text glyph index file, and determine the first glyph index set corresponding to the number of the first static text.

With reference to some embodiments of the seventh aspect, in some embodiments, the one or more processors are specifically configured to invoke the computer instructions, so that the electronic device performs the following operation: invoking a first static text interface of a graphics engine by using the number of the first static text, to determine the first glyph index set corresponding to the number of the first static text. The first static text interface is a static text interface that is in a plurality of static text interfaces of the graphics engine and that corresponds to the first static text glyph index file.

According to an eighth aspect, an embodiment of this application provides a chip system. The chip system is applied to a lite device, the chip system includes one or more processors, and the processor is configured to invoke computer instructions, so that the lite device performs the method according to any one of the sixth aspect and the possible implementations of the sixth aspect.

According to a ninth aspect, an embodiment of this application provides a computer program product including instructions. When the computer program product runs on a lite device, the lite device is enabled to perform the method according to any one of the sixth aspect and the possible implementations of the sixth aspect.

According to a tenth aspect, an embodiment of this application provides a computer-readable storage medium, including instructions. When the instructions are run on a lite device, the lite device is enabled to perform the method according to any one of the sixth aspect and the possible implementations of the sixth aspect.

It may be understood that the lite device according to the seventh aspect, the chip system according to the eighth aspect, the computer program product according to the ninth aspect, and the computer storage medium according to the tenth aspect are all configured to perform the text display method provided in embodiments of this application. Therefore, for beneficial effects that can be achieved, refer to beneficial effects in a corresponding method. Details are not described herein again.

### BRIEF DESCRIPTION OF DRAWINGS

FIG. 1 is a schematic diagram of an example in which one coded Unicode corresponds to a plurality of glyphs in a complex language according to an embodiment of this application;
FIG. 2 is a schematic diagram of an example of rendering a vector font library in a simple language into a dot-matrix font library in the simple language in the conventional technology;
FIG. 3 is a schematic diagram of an example of rendering a vector font library in a complex language into a dot-matrix font library in the complex language in the conventional technology;
FIG. 4 is a schematic diagram of an example of a unique glyph index according to an embodiment of this application;
FIG. 5 is a schematic diagram of an example of rendering a vector font library in a complex language into a glyph index-based dot-matrix font library in the complex language according to an embodiment of this application;
FIG. 6 is a schematic diagram of a scenario in which a lite device switches a display language according to an embodiment of this application;
FIG. 7 is a schematic diagram of an example of an information flow obtained when a router displays a text in a complex language in the conventional technology;
FIG. 8 is a schematic diagram of an example of a processing process in which a rich device displays a text in a complex language in the conventional technology;
FIG. 9 is a schematic diagram of information flow interaction according to an embodiment of this application;
FIG. 10 is a schematic diagram of a hardware structure of a lite device 100 according to an embodiment of this application;
FIG. 11 is a block diagram of a software structure of a lite device 100 according to an embodiment of this application;
FIG. 12 is a schematic diagram of a hardware structure of a compilation device 200 according to an embodiment of this application;
FIG 13 is a schematic flowchart of a compilation method according to an embodiment of this application;
FIG. 14 is a schematic diagram of an example of a text resource file according to an embodiment of this application;
FIG. 15 is a schematic diagram of an example of an information flow of a static text glyph index file obtained through compilation according to an embodiment of this application;
FIG. 16 is a schematic flowchart of a text display method according to an embodiment of this application;
FIG. 17 is a schematic diagram of an example of a relationship between a display page, a component, and a text number according to an embodiment of this application;
FIG. 18 is a schematic diagram of an example of determining a number of a static text by using a value range according to an embodiment of this application;
FIG. 19 is a schematic diagram of an example of determining a number of a static text by using a parameter in a text number according to an embodiment of this application;
FIG. 20 is a schematic diagram of an example of determining a number of a static text by using a text type parameter according to an embodiment of this application;
FIG. 21 is a schematic diagram of another example of determining a number of a static text by using a text type parameter according to an embodiment of this application;
FIG. 22a is a schematic diagram of an example of invoking a static text interface by using a number of a static text according to an embodiment of this application;
FIG. 22b is a schematic diagram of another example of invoking a static text interface by using a number of a static text according to an embodiment of this application;
FIG. 23a is a schematic diagram of still another example of invoking a static text interface by using a number of a static text according to an embodiment of this application;
FIG. 23b is a schematic diagram of yet another example of invoking a static text interface by using a number of a static text according to an embodiment of this application;
FIG. 24a is a schematic diagram of still yet another example of invoking a static text interface by using a number of a static text according to an embodiment of this application; and
FIG. 24b is a schematic diagram of a further example of invoking a static text interface by using a number of a static text according to an embodiment of this application.

### DESCRIPTION OF EMBODIMENTS

Terms used in the following embodiments of this application are merely intended to describe specific embodiments, but are not intended to limit this application. Terms "one", "a", "the", "the foregoing", "this", and "the one" of singular forms used in this specification and the appended claims of this application are also intended to include plural forms, unless otherwise specified in the context clearly. It should be further understood that a term "and/or" used in this application indicates and includes any one or all of possible combinations of one or more listed items.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of' means two or more than two.

For ease of understanding, the following first describes related terms and concepts that is used in embodiments of this application.

### (1) Unicode:

Unicode (also referred to as Unicode, Unicode, and Unicode) is an industry standard in the field of computer science, including a character set, a coding scheme, and the like. Unicode is developed to solve limitations of conventional character coding schemes, and sets unified and unique binary code for each character in each language, to meet requirements of cross-language and cross-platform text conversion and processing.

In an aspect of word processing, Unicode defines unique code (namely, an integer) for each character rather than a glyph. In other words, Unicode processes a character in an abstract manner (that is, a number), and leaves visual deduction work (for example, a font size, an appearance shape, a font form, and a style) to another functional module for processing, for example, a browser or a word processor. For example, if one character has a plurality of glyphs, the character corresponds to one unique coded Unicode.

### (2) Simple language:

In embodiments of this application, a language in which one character corresponds to one coded Unicode, a character of a text can be directly indexed and displayed by using the coded Unicode, and language texts have no deformation may be referred to as a simple language, which is represented by Chinese, English, or French.

### (3) Complex language:

In embodiments of this application, a language in which one character may have a plurality of types of deformation in different statements, one coded Unicode may correspond to a plurality of glyphs, and shaping measures such as character substitution or syllable substitution need to be performed on language texts based on statements or context semantics may be referred to as a complex language, which is represented by Arabic, Thai, Burmese, or the like.

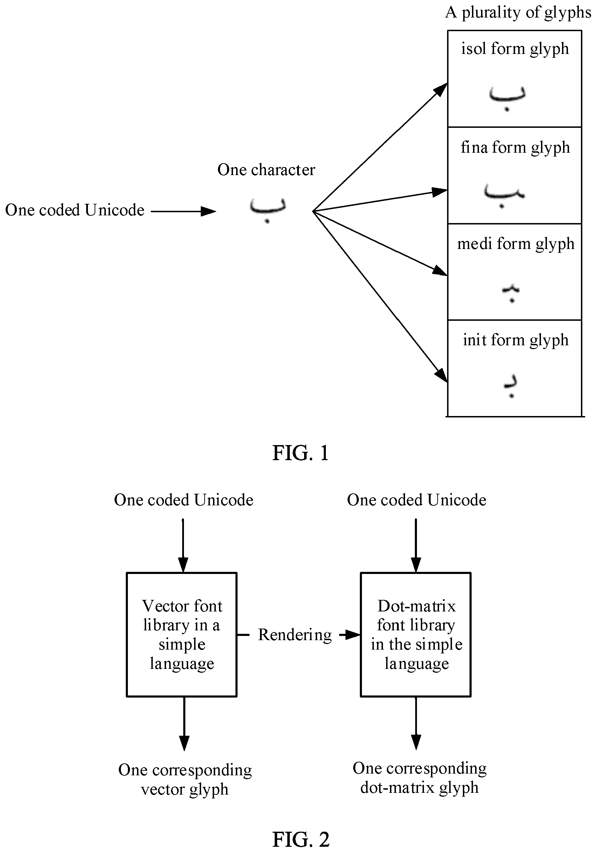

FIG. 1 is a schematic diagram of an example in which one coded Unicode corresponds to a plurality of glyphs in a complex language according to an embodiment of this application. As shown in FIG. 1, in Arabic, one coded Unicode corresponds to one character. Based on different statements or context semantics, the character has four forms of glyph transformation: an isol form, a fina form, a medi form, and an init form.

### (4) Font library:

In embodiments of this application, a file that stores a character set in one or more languages and that can index characters in the character set by using a coded character set (for example, coded Unicode) is referred to as a font library.

### 4.1. Vector font library

In this embodiment of this application, a font library that uses a vector font to represent a character glyph is referred to as a vector font library.

Each glyph in the vector font is described by using a mathematical curve, and includes key points on a boundary of the glyph, derivative information of a connection line, and the like. A font rendering engine reads these mathematical vectors, and then performs a specific mathematical operation to perform rendering. An advantage of this type of font is that an actual font size can be scaled without deformation or color change.

### 4.2. Dot-matrix font library

In this embodiment of this application, a font library that uses a dot-matrix font to represent a character glyph is referred to as a dot-matrix font library.

The dot-matrix font divides each character into 16 × 16 or 24 × 24 points, and then uses each imaginary or real point to represent an outline of the character. A dot-matrix font is also referred to as a bitmap font, where each glyph is represented by a set of two-dimensional pixel information. Due to a bitmap, it is difficult to scale the dot-matrix font. A specific dot-matrix font can only be clearly displayed in a corresponding font size. Otherwise, a text is forcibly scaled up and the glyph is distorted, resulting in mosaic jagged edges.

### (5) Text rendering:

The text rendering may be a process of displaying a vector glyph in a vector font library through a mathematical operation, or may be a process of converting a vector font library into a dot-matrix font library.

FIG. 2 is a schematic diagram of an example of rendering a vector font library in a simple language into a dot-matrix font library in the simple language in the conventional technology. The vector font library in the simple language means that one coded Unicode corresponds to one vector glyph. After the vector font library in the simple language is rendered into an electronic font library in the simple language, one coded Unicode corresponds to one dot-matrix glyph.

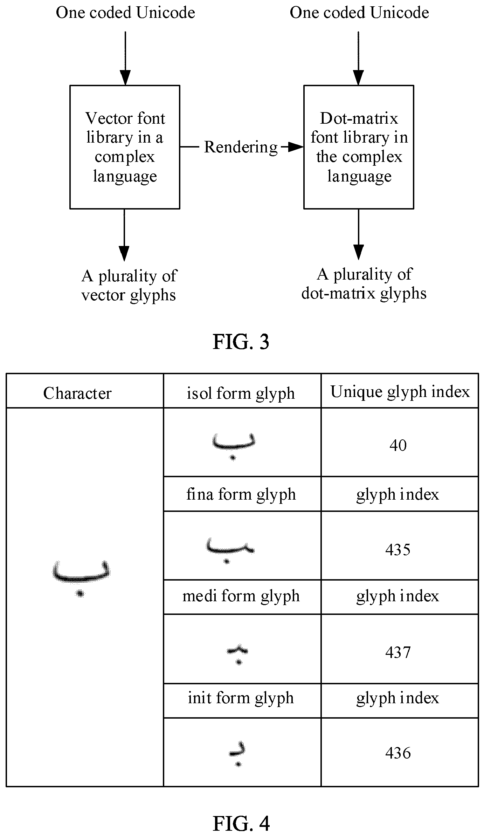

FIG. 3 is a schematic diagram of an example of rendering a vector font library in a complex language into a dot-matrix font library in the complex language in the conventional technology. The vector font library in the complex language means that one coded Unicode corresponds to a plurality of vector glyphs. After the vector font library in the complex language is rendered into the dot-matrix font library in the complex language, one coded Unicode corresponds to a plurality of dot-matrix glyphs.

### (6) Unique glyph index (glyph index):

For a vector font library in a complex language, although same coded Unicode may correspond to different glyphs, each glyph has one unique glyph index in a one-to-one correspondence with the glyph.

FIG. 4 is a schematic diagram of an example of a unique glyph index according to an embodiment of this application. In an Arabic vector font library, one coded Unicode corresponds to one character. Based on different statements or context semantics, the character has four forms of glyph transformation: an isol form, a fina form, a medi form, and an init form. A unique glyph index corresponding to the isol form glyph is 40. A unique glyph index corresponding to the fina form glyph is 435. A unique glyph index corresponding to the medi form glyph is 437. A unique glyph index corresponding to the init form glyph is 436.

It may be understood that, in different font libraries, unique glyph indices corresponding to the glyphs may be different. This is not limited herein.

### (7) Glyph index-based font library:

In embodiments of this application, a font library that uses a coded character set (for example, coded Unicode) to index a character is converted into a font library that uses a unique glyph index to index a glyph, which is referred to as a glyph index-based font library.

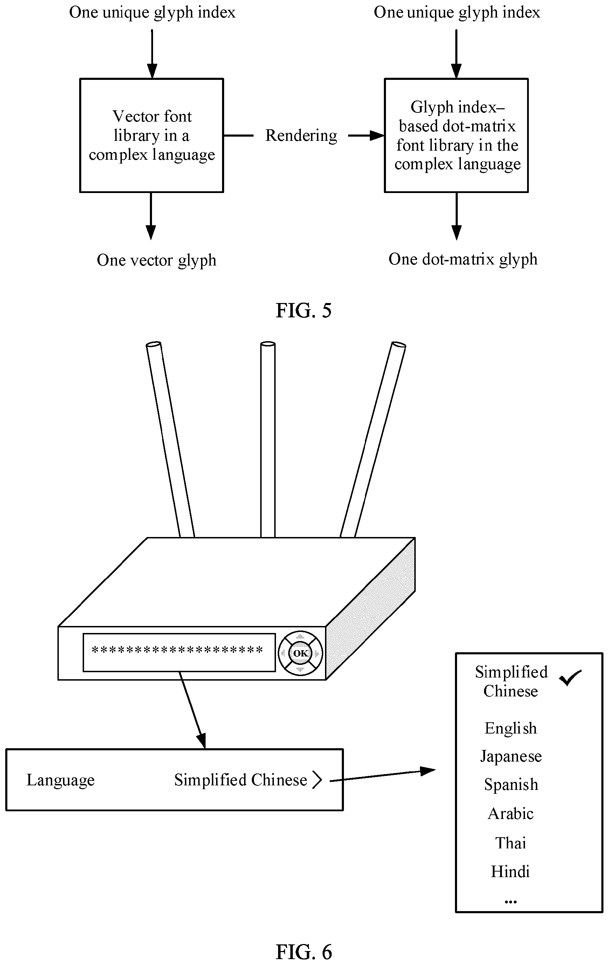

FIG. 5 is a schematic diagram of an example of rendering a vector font library in a complex language into a glyph index-based dot-matrix font library in the complex language according to an embodiment of this application. After the vector font library in the complex language is rendered into the glyph index-based dot-matrix font library in the complex language, a one-to-one correspondence between the unique glyph index and the vector glyph in the original vector font library in the complex language is retained, and converted into a one-to-one correspondence between the unique glyph index and a dot-matrix glyph. In this way, a glyph in the glyph index-based dot-matrix font library in the complex language may be indexed directly by using the unique glyph index. In embodiments of this application, the vector font library in the complex language may be rendered into the glyph index-based dot-matrix font library in the complex language on a compilation device.

### (8) Text shaping:

In a font library in a complex language, one character corresponding to one coded Unicode has a plurality of glyphs, and it needs to be determined, based on a statement or context semantics, which glyph in the plurality of glyphs should be specifically used. Therefore, after the font library is indexed by using the coded Unicode to obtain a character, it needs to be determined, through text shaping, which glyph corresponding to the character is specifically used.

In embodiments of this application, text shaping is a process of inputting a coded character set of a text and outputting a correct glyph of the text or a glyph index set corresponding to the text. Text shaping is used to determine a correct glyph corresponding to a character in a character string of the text.

Text shaping may specifically include operations such as glyph substitution, Bidi bidirectional text shaping, complex syllable substitution, and semantic line feed.

In embodiments of this application, a coded character set corresponding to a character string of a first static text is input into a text shaping algorithm library, to obtain a first glyph index set. The text shaping algorithm library may use a first glyph index-based font library, and the first glyph index-based font library is a glyph index-based font library. The first glyph index set may include one or more unique glyph indices. Each unique glyph index has a glyph uniquely corresponding to the unique glyph index in the first glyph index-based font library.

Optionally, the text shaping algorithm library for text shaping may use some open-source algorithm libraries, and different open-source algorithm libraries may have different functions. Some open-source algorithm libraries, for example, GPOS library and GSUB library, have weak functions, and can only be used for glyph substitution and Bidi bidirectional text shaping. Some open-source algorithm libraries have strong functions, for example, Harfbuzz library, Bidi library, and ICU-linebreak library, and can be used for comprehensive text shaping. In actual application, text shaping may also be performed by using an algorithm library designed by a developer, or shaping may be performed by using a combination of different algorithm libraries. This is not limited herein.

It may be understood that, text shaping in embodiments of this application needs to input a coded character set of a text, and then output a glyph index set corresponding to the text. Moreover, the unique glyph index corresponding to a same glyph in different font libraries may be different. Therefore, a font library used after text shaping and a font library used during text shaping need to be a same font library, or a font library in which the same glyph has a same unique glyph index.

In embodiments of this application, the glyph index set obtained after text shaping may be a glyph index array, or may be a combination of a plurality of unique glyph indices stored in another form, for example, a table or a stack. This is not limited herein.

### (9) Rich device:

In embodiments of this application, a rich device is an electronic device with a large ROM and a large RAM, for example, some electronic devices using an Android system, specifically, for example, a mobile phone or a computer.

### (10) Lite device:

In embodiments of this application, a lite device is an electronic device with a small ROM and a small RAM, for example, a microcontroller unit (microcontroller unit, MCU) or a single-chip microcomputer. For example, the lite device has only an MB-level ROM and a KB-level RAM, specifically, for example, an electronic watch or a router.

### (11) Static text:

In embodiments of this application, the static text is a text with fixed content in a lite device. The text with fixed content is a text that is prestored in a resource file of the lite device, for example, a text of a setting option, a menu, and the like in the lite device.

### (12) Dynamic text:

In embodiments of this application, the dynamic text is a text with unfixed content in a lite device. The text with unfixed content is a text that is not prestored in a resource file of the lite device, for example, a text temporarily entered by a user, or a text received from another device.

FIG. 6 is a schematic diagram of a scenario in which a lite device switches a display language according to an embodiment of this application. A language currently used by a router is simplified Chinese. Based on selection of a user, the router may also support switching to another language, for example, English, Japanese, Spanish, Arabic, Thai, and Hindi. Some complex languages are included.

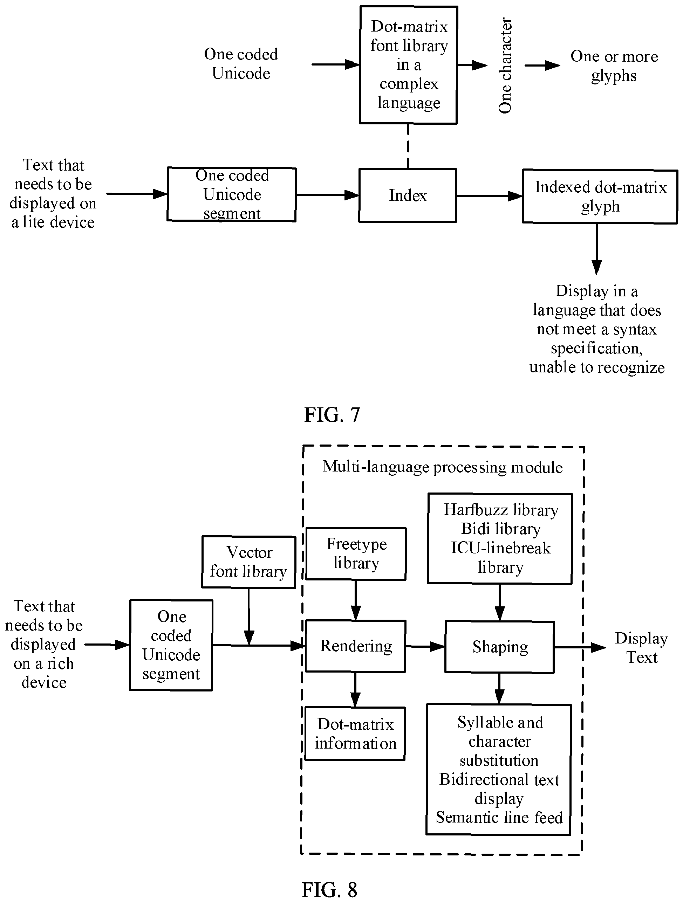

FIG. 7 is a schematic diagram of an example of an information flow obtained when the router displays a text in a complex language in the conventional technology. As a lite device, the router has only an MB-level ROM and a KB-level RAM. During running, the router indexes a character from a dot-matrix font library in the complex languages by using coded Unicode corresponding to a text that needs to be displayed and displays the character. A resource capability of the router does not support complete shaping. Therefore, when the router switches to some complex languages, such as Thai, Arabic, Hindi, and Burmese, syntax of a text displayed after the dot-matrix font library is indexed by using Unicode may not conform to a syntax habit of the complex language. Consequently, a user using the language cannot identify the language.

FIG. 8 is a schematic diagram of an example of a processing process in which a rich device displays a text in a complex language in the conventional technology. During running, after indexing a character from a vector font library file by using the coded Unicode corresponding to the text that needs to be displayed, the rich device renders the character into dot-matrix information by using a Freetype library in a multi-language processing unit, and performs shaping and operations such as syllable and character substitution, bidirectional text display, and semantic line feed by using a Harfbuzz library, a Bidi library, and an ICU-linebreak library, to obtain a correct text. All these operations need to be performed during running, which needs to occupy a large quantity of resource capabilities.

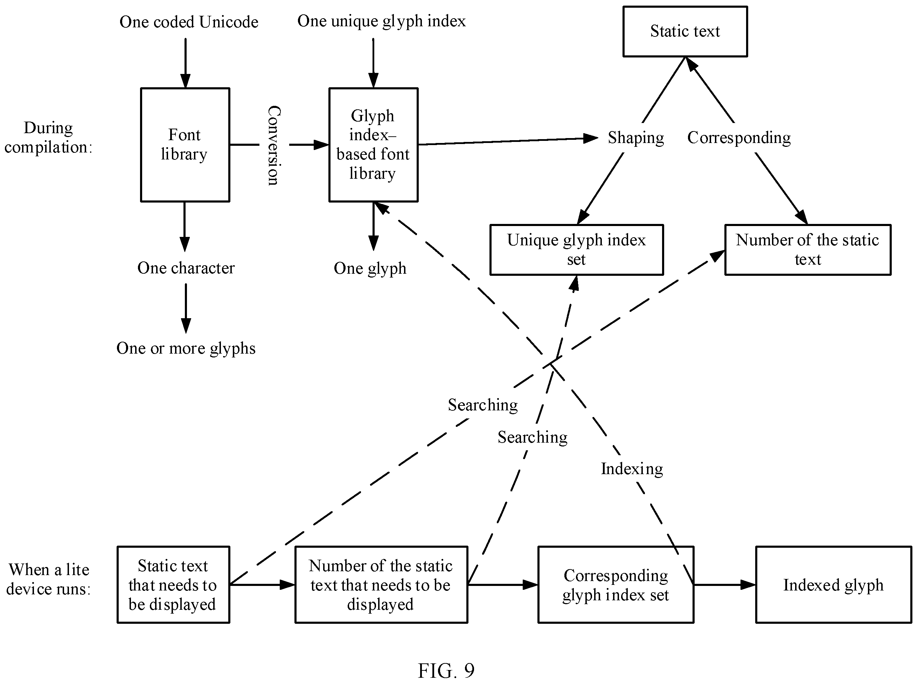

FIG. 9 is a schematic diagram of information flow interaction according to an embodiment of this application. In this embodiment of this application, during compilation, a font library that uses a coded character set (for example, coded Unicode) to index a character is converted into a glyph index-based font library that uses a unique glyph index to index a glyph. In addition, text shaping is performed on static texts in the lite device by using the glyph index-based font library, to obtain a unique glyph index set of the static texts, and a correspondence between a number of the static text and the unique glyph index set is established. During running, the lite device may directly determine a corresponding glyph index set based on the number of the static text that needs to be displayed, and then indexes a corresponding glyph from the glyph index-based font library based on the glyph index set, to display the indexed glyph. In this way, during running, the lite device does not need to perform a shaping operation, so that a displayed static text has a shaped display effect. This avoids a problem that the language cannot be identified due to a syntax error of the complex language caused by no shaping or incomplete shaping when the lite device runs, and improves a capability of the lite device to support the complex language.

In the description of this embodiment of this application, a character string of a text that needs to be displayed may be briefly referred to as a text that needs to be displayed, a character string of a static text may be briefly referred to as a static text, a unique identifier of the static text may be briefly referred to as a number of the static text, a character string of a dynamic text may be briefly referred to as a dynamic text, a set of a plurality of unique glyph indices may be briefly referred to as a glyph index set or a unique glyph index set, a set of a plurality of glyphs may be briefly referred to as a glyph set, and text shaping may be briefly referred to as shaping. Details are not described below.

The following first describes an example lite device 100 according to an embodiment of this application.

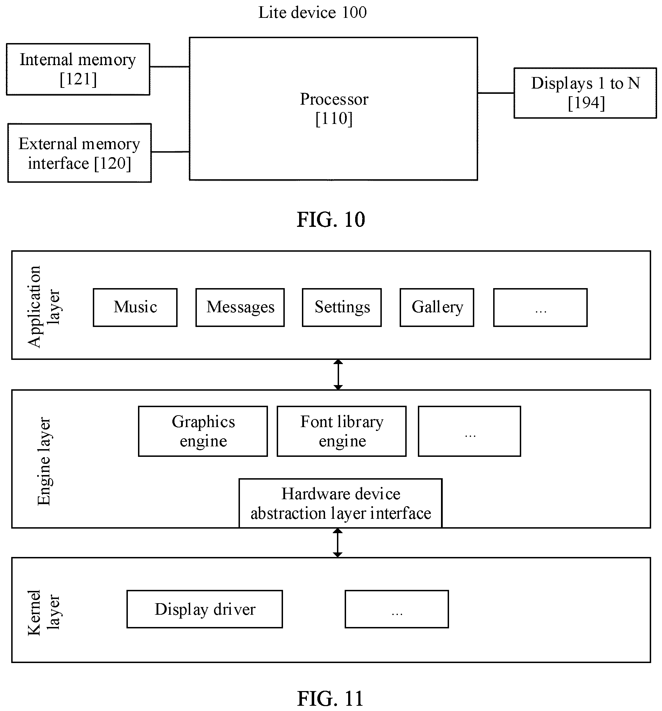

FIG. 10 is a schematic diagram of a hardware structure of the lite device 100 according to an embodiment of this application.

The lite device 100 is used as an example below to describe embodiments in detail.

It should be understood that the lite device 100 may have more or fewer components than those shown in the figure, or two or more components may be combined, or different component configurations may be used. Components shown in the figure may be implemented by hardware including one or more signal processing and/or application-specific integrated circuits, software, or a combination of hardware and software.

The lite device 100 may include a processor 110, an external memory interface 120, an internal memory 121, a display 194, and the like. It can be understood that the structure shown in this embodiment of the present invention does not constitute a specific limitation on the lite device 100. In some other embodiments of this application, the lite device 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the lite device 100. The controller may generate an operation control signal based on instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to a touch sensor, a charger, a flash, the camera, and the like through different I2C bus interfaces. For example, the processor 110 may be coupled to the touch sensor through the I2C interface, so that the processor 110 communicates with the touch sensor through the I2C bus interface, to implement a touch function of the lite device 100.

The I2S interface may be configured to perform audio communication. In some embodiments, the processor 110 may include a plurality of groups of I2S buses. The processor 110 may be coupled to the audio module through the I2S bus, to implement communication between the processor 110 and the audio module. In some embodiments, the audio module may transmit an audio signal to the wireless communication module through the I2S interface, to implement a function of answering a call through a Bluetooth headset.

The PCM interface may also be used to perform audio communication, and sample, quantize, and code an analog signal. In some embodiments, the audio module may be coupled to the wireless communication module through a PCM bus interface. In some embodiments, the audio module may alternatively transfer an audio signal to the wireless communication module through the PCM interface, to implement a function of answering a call by using a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communications module. For example, the processor 110 communicates with a Bluetooth module in the wireless communication module through the UART interface, to implement a Bluetooth function. In some embodiments, the audio module may transmit an audio signal to the wireless communication module through the UART interface, to implement a function of playing music through a Bluetooth headset.

The MIPI interface may be configured to connect the processor 110 to a peripheral component such as a display 194 or the camera. The MIPI interface includes a camera serial interface (camera serial interface, CSI), a display serial interface (display serial interface, DSI), and the like. In some embodiments, the processor 110 communicates with the camera through the CSI interface, to implement a photographing function of the lite device 100. The processor 110 communicates with the display 194 through the DSI interface, to implement a display function of the lite device 100.

The GPIO interface may be configured by using software. The GPIO interface may be configured as a control signal or a data signal. In some embodiments, the GPIO interface may be configured to connect the processor 110 to the camera, the display 194, the wireless communications module, the audio module, the sensor module, or the like. The GPIO interface may alternatively be configured as an I2C interface, an I2S interface, a UART interface, an MIPI interface, or the like.

The SIM interface may be configured to communicate with the SIM card interface, to implement a function of transmitting data to an SIM card or reading data in an SIM card.

The USB port is a port that conforms to a USB standard specification, and may be specifically a mini USB port, a micro USB port, a USB type-C port, or the like. The USB interface may be configured to connect to a charger to charge the lite device 100, or may be configured to transmit data between the lite device 100 and a peripheral device, or may be configured to connect to a headset for playing audio through the headset. The interface may be further configured to connect to another lite device such as an AR device.

It may be understood that an interface connection relationship between the modules that is shown in this embodiment of the present disclosure is merely an example for description, and does not constitute a limitation on a structure of the lite device 100. In some other embodiments of this application, the lite device 100 may alternatively use an interface connection manner different from that in the foregoing embodiment, or use a combination of a plurality of interface connection manners.

The lite device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the lite device 100 may include one or N displays 194, where N is a positive integer greater than 1.

The external memory interface 120 may be used to connect to an external storage card, for example, a micro SD card, to extend a storage capability of the lite device 100. The external memory card communicates with the processor 110 through the external memory interface 120, to implement a data storage function. For example, files such as music and videos are stored in the external storage card.

The internal memory 121 may be configured to store computer-executable program code. The executable program code includes instructions. The processor 110 runs the instructions stored in the internal memory 121, to perform various function applications of the lite device 100 and data processing. The internal memory 121 may include a program storage area and a data storage area. The program storage area may store an operating system, an application required by at least one function, and the like. The data storage area may store data created during use of the lite device 100. In addition, the internal memory 121 may include a RAM, and may further include a ROM, for example, at least one magnetic disk storage device, a flash memory, and a universal flash storage (universal flash storage, UFS).

Usually, a capacity of the RAM included in the memory storage 121 of the lite device 100 is only at a KB level, and a capacity of the ROM included in the memory storage 121 of the lite device 100 is only at an MB level. This is not limited herein.

FIG. 11 is a block diagram of a software structure of the lite device 100 according to an embodiment of this application.

In a layered architecture, software is divided into several layers, and each layer has a clear role and task. The layers communicate with each other through a software interface. In some embodiments, the system is divided into three layers, namely, an application layer, an engine layer, and a kernel layer from top to bottom.

The application layer may include a series of application packages.

As shown in FIG. 11, the application package may include applications (which may also be referred to as applications) such as Music, Messages, Settings, and Gallery.

The engine layer provides an application programming interface (application programming interface, API) and a programming framework for the application. The engine layer includes some predefined functions.

As shown in FIG. 11, the engine layer may include a graphics engine, a font library engine, and the like.

In this embodiment of this application, the graphics engine is configured to provide an interface of the graphics engine, and the application may invoke the interface of the graphics engine to draw a page and a text.

In some embodiments of this application, the graphics engine may provide different interfaces: a static text interface and a dynamic text interface. The application may invoke the static text interface to convert a number of a static text into a corresponding glyph index set, and may invoke the dynamic text interface to shape a dynamic text, to generate a corresponding glyph index set.

In some embodiments of this application, the static text interface may include a plurality of different interfaces. The application may invoke different static text interfaces to access different files that store a correspondence between the number of the static text and the glyph index set, to obtain the glyph index set corresponding to the number of the static text input when the interface is invoked in a corresponding file. This is not limited herein.

In this embodiment of this application, the font library engine is configured to provide a font library index interface, and the application may invoke the font library index interface by using a unique glyph index, to search for a corresponding glyph.

The engine layer may further include a hardware device abstraction layer interface, and the hardware device abstraction layer interface may be used to invoke an interface of the kernel layer.

The kernel layer is a layer between hardware and software. The kernel layer includes at least a display driver. The kernel layer controls a hardware device through the driver to complete graphics and text display.

The hardware device can notify the graphics engine and the font library engine of a drawing status of the text or graphics in an interrupt manner, and then the graphics engine and the font library engine send the drawing status back to the application for subsequent processing.

In some embodiments of this application, there may be no kernel layer in a system, and the graphics engine and the font library engine may directly control the hardware device by using the hardware device abstraction layer interface at the engine layer. This is not limited herein.

The following describes a schematic diagram of an example hardware structure of a compilation device 200 according to an embodiment of this application.

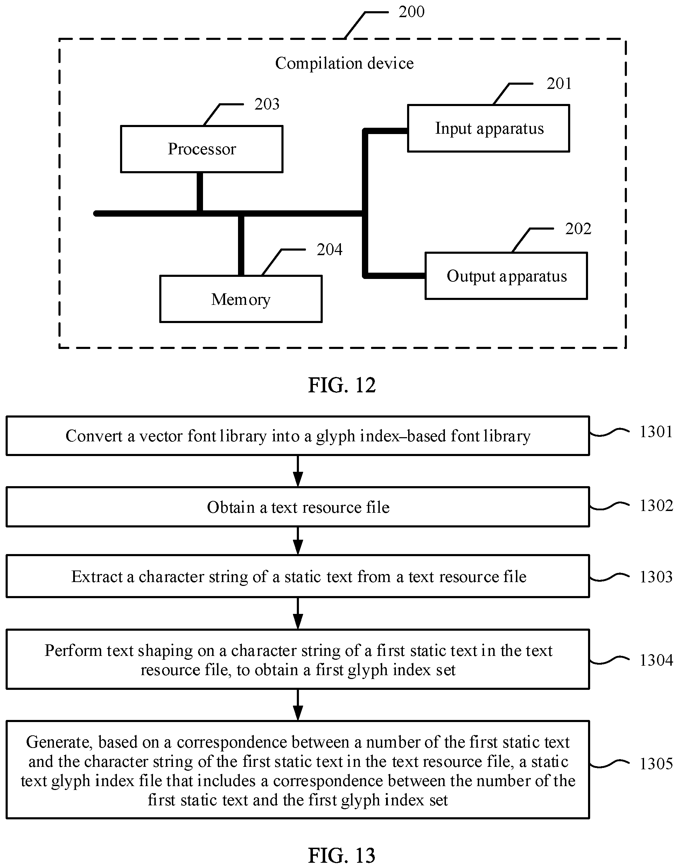

FIG. 12 is a schematic diagram of a hardware structure of the compilation device 200 according to an embodiment of this application.

The compilation device 200 may include an input apparatus 201, an output apparatus 202, a processor 203, and a memory 204 (there may be one or more processors 203 in the compilation device 200, and one processor 203 is used as an example in FIG. 2). In some embodiments of this application, the input apparatus 201, the output apparatus 202, the processor 203, and the memory 204 may be connected through a bus or in another manner. In FIG. 2, that the input apparatus 201, the output apparatus 202, the processor 203, and the memory 204 are connected through a bus is used as an example.

The processor 203 invokes an operation instruction stored in the memory 204, so that the compilation device 200 performs the compilation method in embodiments of this application.

The following separately describes in detail the compilation method and the text display method in embodiments of this application with reference to the software and hardware structures of the example lite device 100 and the hardware structure of the compilation device 200.

FIG 13 is a schematic flowchart of the compilation method according to an embodiment of this application.

S1301: A compilation device converts a vector font library into a glyph index-based font library.

In this embodiment of this application, the compilation device may convert a common vector font library that indexes a character by using Unicode into a glyph index-based font library that indexes a glyph by using a unique glyph index. For details, refer to the description of (7) glyph index-based font library in the foregoing term descriptions. Details are not described herein again.

It should be noted that, in some embodiments, the glyph index-based font library obtained by the compilation device through conversion may be a dot-matrix font library. In some embodiments, the glyph index font library obtained by the compilation device through conversion may alternatively be a vector font library. This is not limited herein.

If the glyph index-based font library is a vector font library, after finding a vector glyph by using the glyph index-based font library, the lite device further needs to first render the vector glyph, and then display the vector glyph.

If the glyph index-based font library is a dot-matrix font library, after finding a dot-matrix glyph by using the glyph index-based font library, the lite device may directly display the dot-matrix glyph.

S1302: The compilation device obtains a text resource file.

The text resource file may include correspondences between character strings of texts in different languages that need to be displayed in the lite device, text numbers, display formats of the texts, alignment modes, used font libraries, and the like. The character string of the text may include a character string of a static text and a character string of a dynamic text. Different format characters can be used to distinguish the character string of the dynamic text from the character string of the static text. For example, a character string that is in angle brackets may be set to the character string of the dynamic text, and a character string that is not in angle brackets may be set to the character string of the static text.

In the following, a character string of a text is referred to as a text for short, a character string of a static text is referred to as a static text for short, and a character string of a dynamic text is referred to as a dynamic text for short.

It should be noted that, when a system or an application is designed, the text resource file is generated, and is used to store a text that needs to be displayed in the system or the application.

The text resource file may be stored in a plurality of forms, for example, may be stored in a table, an extensible markup language (extensible markup language, XML) format, or an array. This is not limited herein.

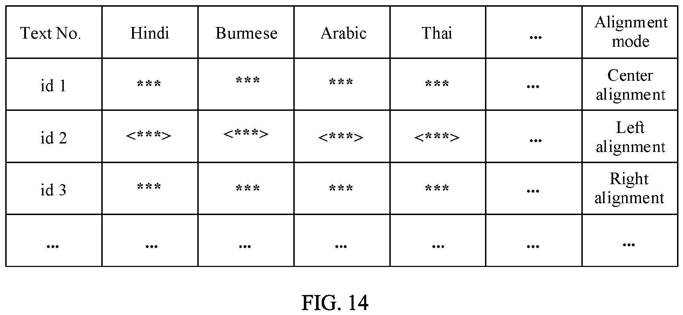

For example, FIG. 14 is a schematic diagram of an example of a text resource file. A text number corresponds to a text displayed in a plurality of languages, the alignment mode of the text, the used font library, and the used format. A text included in angle brackets is a dynamic text, and a text not included in angle brackets is a static text. id 2 corresponds to the dynamic text, and both id 1 and id 3 correspond to the static text.

It may be understood that a storage form of the text in the text resource file may be a coded character set such as coded Unicode.

It should be noted that the text number is generally bound to each component on a page that needs to be displayed in the lite device, and a text corresponding to the text number bound to the component may be displayed in the component based on a currently used language selected in the system.

In some embodiments, the lite device may have only one uniformly used text resource file, and texts that need to be displayed in the system and the application are stored in the uniformly used text resource file.

In some embodiments, the lite device may have two text resource files, the system may have a separate text resource file, and the application may use another separate text resource file.

In some embodiments, the lite device may have more text resource files, the system may have a separate text resource file, and each application may have a separate text resource file. The separate text resource file of each application can be stored in a directory of the application.

In some embodiments, a text resource file provided by a third party may also be used.

A correspondence between a text that needs to be used by the application and the text number may be added by an application developer to the text resource file, may be directly added to the uniformly used text resource file, or may be added to the separate text resource file of the application. This is not limited herein.

It may be understood that a text number of each text in the text resource file is edited and allocated by the developer during design. To facilitate subsequent different processing performed on the static text and the dynamic text, when the text number is designed, different number plans may be used to distinguish the static text from the dynamic text. For example, a static text is set within a first value range, and a dynamic text is set beyond the first value range. Alternatively, a dynamic text is set within a second value range, and a static text is set beyond the second value range. Alternatively, a static text is set within a third value range, and a dynamic text is set within a fourth value range. Alternatively, different parameters may be carried in the text number to distinguish the static text from the dynamic text. For example, an initial of the text number of the static text is set to J, and an initial of the text number of the dynamic text is set to D. This is not limited herein.

S1303: The compilation device extracts the character string of the static text from the text resource file.

The compilation device may extract the character string of the static text from the text resource file based on a preset text feature, and the extracted character string of the static text may include a character string of a first static text. For example, if the dynamic text is set to having a format character different from that of the static text, it may be determined that a text that does not have the format character is the static text, and the static text is extracted.

For example, if the dynamic text is included in angle brackets, the static text does not have angle brackets. The compilation device may extract each static text without angle brackets from the text resource file.

Specifically, if texts in a plurality of languages are in the text resource file, the compilation device may extract each static text in a complex language from the text resource file.

S1304: The compilation device performs text shaping on the character string of the first static text in the text resource file, to obtain a first glyph index set.

The compilation device may shape each static text in the complex language extracted from the text resource file, to obtain a corresponding glyph index set. For example, the compilation device may perform text shaping on the character string of the first static text in the text resource file, to obtain the first glyph index set. For specific descriptions of text shaping, refer to content in (8) text shaping in the foregoing term descriptions. Details are not described herein again.

S1305: The compilation device generates, based on a correspondence between the number of the first static text and the character string of the first static text in the text resource file, a static text glyph index file that includes a correspondence between the number of the first static text and the first glyph index set.

In the text resource file, one text number corresponds to character strings of static texts in a plurality of different languages. The first static text may be a text in a complex language. In this case, the generating, based on a correspondence between the number of the first static text and the character string of the first static text in the text resource file, a static text glyph index file that includes a correspondence between the number of the first static text and the first glyph index set may be specifically: generating, based on a correspondence among the number of the first static text, a language type of the first static text, and the first static text in the text resource file, a static text glyph index file that includes a correspondence among the number of the first static text, the language type of the first static text, and the first glyph index set.

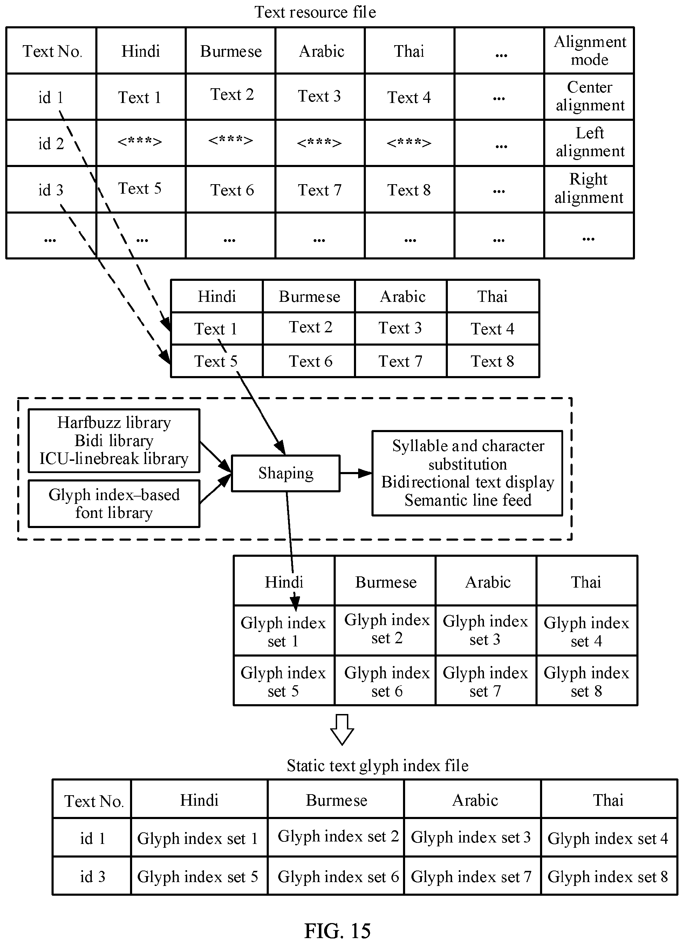

FIG. 15 is a schematic diagram of an example of an information flow of a static text glyph index file obtained through compilation according to an embodiment of this application. For example, according to the method described in step S1303, the compilation device extracts static texts that are not included in angle brackets in a text resource: a text 1, a text 2, a text 3, a text 4, a text 5, a text 6, a text 7, and a text 8, and performs text shaping.

According to the method described in step S1304, the shaping uses open-source algorithm libraries such as a Harfbuzz library, a Bidi library, and an ICU-linebreak library and the glyph index-based font library compiled in step S1301, to perform operations such as syllable and character substitution, bidirectional text display, and semantic line feed. Finally, the text 1 is shaped to generate a glyph index set 1, the text 2 is shaped to generate a glyph index set 2, the text 3 is shaped to generate a glyph index set 3, the text 4 is shaped to generate a glyph index set 4, the text 5 is shaped to generate a glyph index set 5, the text 6 is shaped to generate a glyph index set 6, the text 7 is shaped to generate a glyph index set 7, and the text 8 is shaped to generate a glyph index set 8.

According to the method described in step S1305, the compilation device generates the static text glyph index file based on a correspondence among the number of the static text, the language type and the static text in the text resource file. For example, in the text resource file, id 1 corresponds to the text 1 in a language type of Hindi, and the text 1 is shaped to generate the glyph index set 1. Therefore, in the static text glyph index file, id 1, Chinese, and the glyph index set 1 correspond to each other. Similarly, id 1, Burmese, and the glyph index set 2 correspond to each other. id 1, Arabic, and the glyph index set 3 correspond to each other. id 1, Thai, and the glyph index set 4 correspond to each other. id 2, Hindi, and the glyph index set 5 correspond to each other. id 2, Burmese, and the glyph index set 6 correspond to each other. id 2, Arabic, and the glyph index set 7 correspond to each other. id 2, Thai, and the glyph index set 8 correspond to each other.

Optionally, the correspondence in the static text glyph index file may further include a text type parameter. A value of a flag bit may be set to a static text parameter, and corresponds to a text number, indicating that all texts corresponding to the text numbers in the static text glyph index file are static texts.

Optionally, if there are a plurality of different text resource files, different static text parameters may be used to distinguish sources of the text resource files.

It may be understood that the static text glyph index file may be stored in various different forms, for example, may be stored in a form of a table, a binary file, or an array. This is not limited herein.

Optionally, the compilation device may further store the static text glyph index file.

Optionally, based on different sources and different purposes of the text resource file, the compilation device may store the static text glyph index file in different locations. For example, if the text resource file is a text resource file uniformly used by a system and an application in the lite device, the compilation device may store the obtained static text glyph index file in a system directory of the lite device. For example, if the text resource file is a text resource file independently used by an application in the lite device, the compilation device may store the obtained static text glyph index file in a directory of the application. For example, if the text resource file is a text resource file provided by a third party on a network, the compilation device may store the obtained static text glyph index file in a public server on the network. This is not limited herein.

In this embodiment of this application, the compilation device shapes the static text in the text resource file, to obtain the static text glyph index file and stores the static text glyph index file, so that a device that uses the static text glyph index file can obtain a corresponding glyph index set based on the number of the static text. The glyph index-based font library is searched based on the glyph index set, to display a correct shaped glyph of the static text. Shaping does not need to be performed each time the static text is displayed. This reduces power consumption of the device that uses the static text glyph index file, and improves a capability of the device that uses the static text glyph index file to support a complex language.

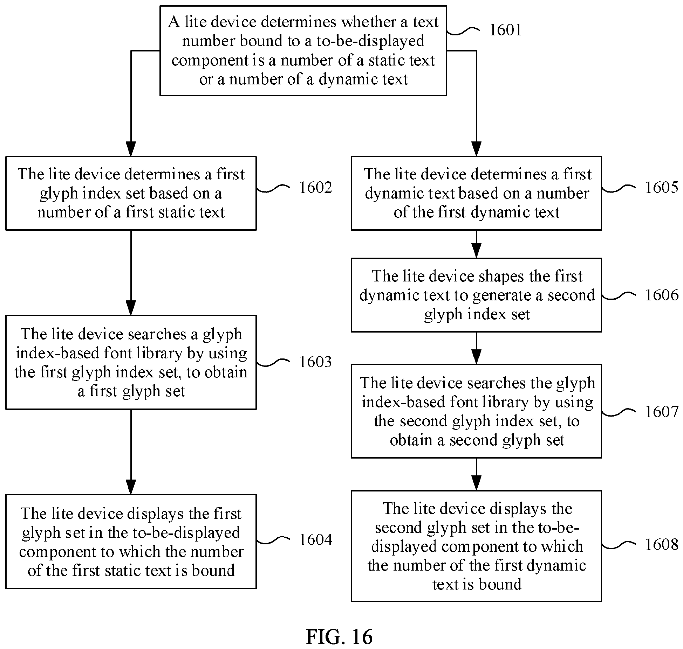

FIG. 16 is a schematic flowchart of a text display method according to an embodiment of this application.

S1601: A lite device determines whether a text number bound to a to-be-displayed component is a number of a static text or a number of a dynamic text.

It should be noted that one display page generally includes one or more to-be-displayed components, and each component may be bound to one or more text numbers.

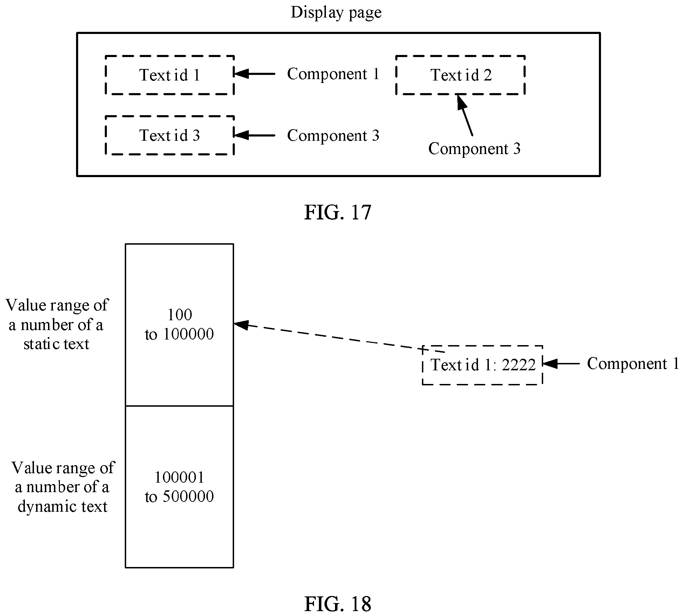

For example, FIG. 17 is a schematic diagram of an example of a relationship between a display page, a component, and a text number. There are three components to be displayed. A component 1 is bound to a text id 1, a component 2 is bound to a text id 2, and a component 3 is bound to a text id 3.

The lite device may determine whether the text number bound to the to-be-displayed component is the number of the static text or the number of the dynamic text in a plurality of manners.

Optionally, if a developer plans a text number when designing a system or an application, and different number plans are used in the text resource file to distinguish the static text from the dynamic text, the lite device may determine, based on a value interval within which the text number falls, whether the text number is the number of the static text or the number of the dynamic text.

For example, if a text number within a first value range is set to the number of the static text, and a text number beyond the first value range is set to the number of the dynamic text, the lite device may determine, based on whether the text number falls within the first value range, whether the text number is the number of the static text or the number of the dynamic text.

For example, if a text number within a second value range is set to the number of the dynamic text, and a text number beyond the second value range is set to the number of the static text, the lite device may determine, based on whether the text number falls within the second value range, whether the text number is the number of the static text or the number of the dynamic text.

For example, if a text number within a third value range is set to the number of the static text, and a text number beyond a fourth value range is set to the number of the dynamic text, the lite device may determine, based on whether the text number falls within the third value range or the fourth value range, whether the text number is the number of the static text or the number of the dynamic text.

FIG. 18 is a schematic diagram of an example of determining the number of the static text by using a value range according to an embodiment of this application. If a text number within 100 to 100000 is set to the number of the static text, a text number within 100001 to 500000 is set to the number of the dynamic text. If a number of the text id 1 bound to the component 1 is 2222, 2222 is within the value range 100 to 100000, the text id 1 is the number of the static text.

Optionally, planning of the text number may also use different parameters in the text number to identify whether the text number is the number of the dynamic text or the number of the static text.

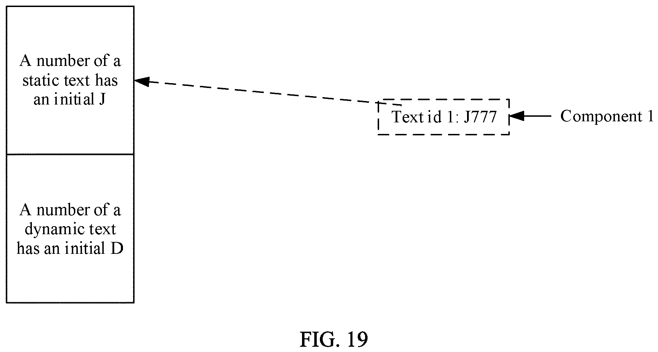

FIG. 19 is a schematic diagram of an example of determining the number of the static text by using a parameter in the text number according to an embodiment of this application. If an initial of the text number of the static text is set to J, an initial of the text number of the dynamic text is set to D. If a number of the text id 1 bound to the component 1 is J777, because the initial of the number is J, the text id 1 is the number of the static text.

Optionally, because the static text is converted into the glyph index set in a compilation phase and then stored in the static text glyph index file, if the lite device uses only one uniform static text glyph index file, the lite device searches the static text glyph index file by using the text number. If the text number can be found in the static text glyph index file, it may indicate that the text number is the number of the static text; otherwise, the text number is the number of the dynamic text.

Optionally, a text type parameter corresponding to the text number may be stored in a correspondence in the text resource file or the static text glyph index file, and is used to identify whether the text number is the number of the static text or the number of the dynamic text. The lite device may search the text resource file or the static text glyph index file based on the text number, to obtain the text type parameter, so as to determine whether the text number is the number of the static text or the number of the dynamic text.

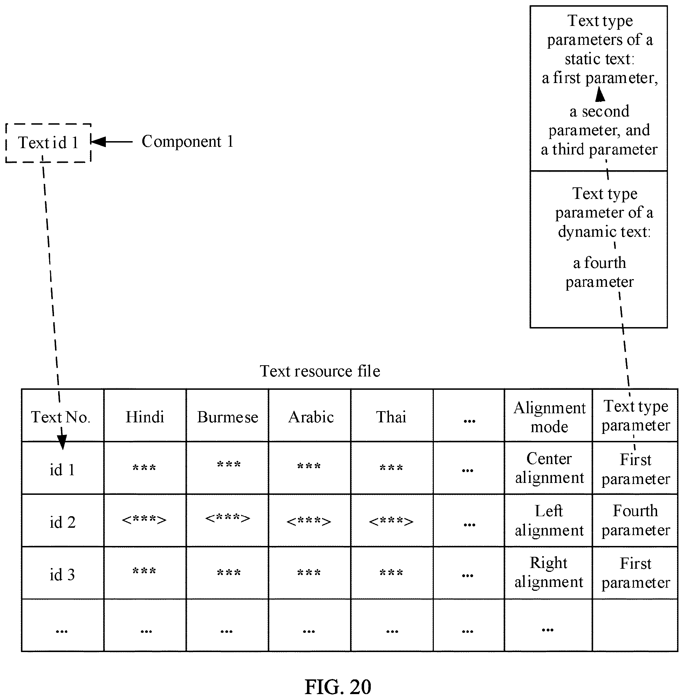

FIG. 20 is a schematic diagram of an example of determining the number of the static text by using the text type parameter according to an embodiment of this application. The correspondence of the text resource file may include the text type parameter. If a first parameter, a second parameter, and a third parameter all represent the static text, and a fourth parameter represents the dynamic text, the text resource file is searched by using the text id 1, to learn that a text type parameter corresponding to the text resource file is the first parameter. Therefore, it may be determined that the text id 1 is the number of the static text.

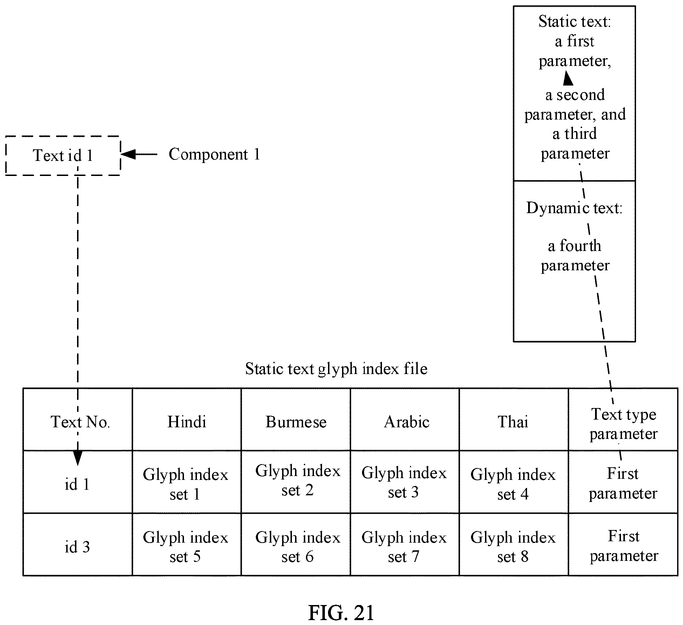

FIG. 21 is a schematic diagram of another example of determining the number of the static text by using the text type parameter according to an embodiment of this application. The correspondence of the static text glyph index file may include the text type parameter. If the first parameter, the second parameter, and the third parameter all represent the static text, and the fourth parameter represents the dynamic text, the static text glyph index file is searched by using the text id 1, to learn that a text type parameter corresponding to the static text glyph index file is the first parameter. Therefore, it may be determined that the text id 1 is the number of the static text.

It may be understood that the lite device may further determine whether the text number is the number of the static text or the number of the dynamic text in many different manners. This is not limited herein.

S 1602: The lite device determines a first glyph index set based on a number of a first static text.

After determining that the text number bound to the to-be-displayed component is the number of the static text, for example, the number of the first static text, the lite device may determine the first glyph index set based on the number of the first static text.

Specifically, the lite device may invoke a static text interface of a graphics engine, and search, by using the number of the first static text, for a correspondence between the number of the static text and the glyph index set stored in the static text glyph index file, to obtain the first glyph index set corresponding to the number of the first static text.

Optionally, if the lite device supports a plurality of languages, the lite device may invoke the static text interface of the graphics engine, and search, by using the number of the first static text and a language type currently used in the system, for a correspondence among the number of the static text, the language type, and the glyph index set stored in the static text glyph index file, to obtain the first glyph index set corresponding to the number of the first static text and the currently used language type.

In some embodiments, the lite device may use a plurality of text resource files, for example, a common text resource file in a system directory, a text resource file independently used in each application, or a text resource file stored in a network server. Correspondingly, after the static text glyph index file is compiled, the lite device may also use the plurality of static text glyph index files, for example, the common static text glyph index file in the system directory, the static text glyph index file independently used in each application, or the static text glyph index file stored in the network server.

In this case, the lite device may search the static text glyph index file corresponding to the number of the first static text in a plurality of different manners.

Optionally, different value ranges may be allocated to different static text glyph index files based on a predetermined number plan. Which static text glyph index file is to be searched for the number of the first static text may be determined based on the value range within which the text number falls.

When there are a plurality of static text glyph index files, the graphics engine may have one static text interface, or may have a plurality of static text interfaces, which respectively correspond to different static text glyph index files.

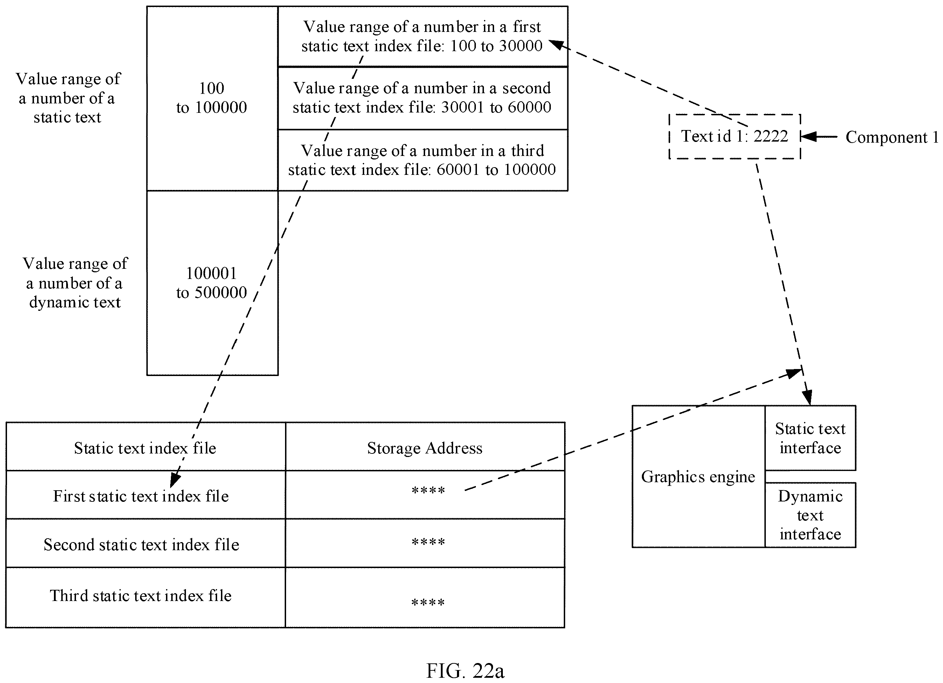

FIG. 22a is a schematic diagram of an example of invoking the static text interface by using the number of the static text according to an embodiment of this application. When there is only one static text interface, the lite device may further store a correspondence between a static text index file and a storage address. After determining that the number of the first static text belongs to a first static text index file, the lite device may query a correspondence between the static text index file and the storage address, to determine the storage address of the first static text index file, and then invoke the static text interface by using the number of the first static text and the storage address of the first static text index file, so that the graphics engine can find, from the first static text index file, the first glyph index set corresponding to the number of the first static text.

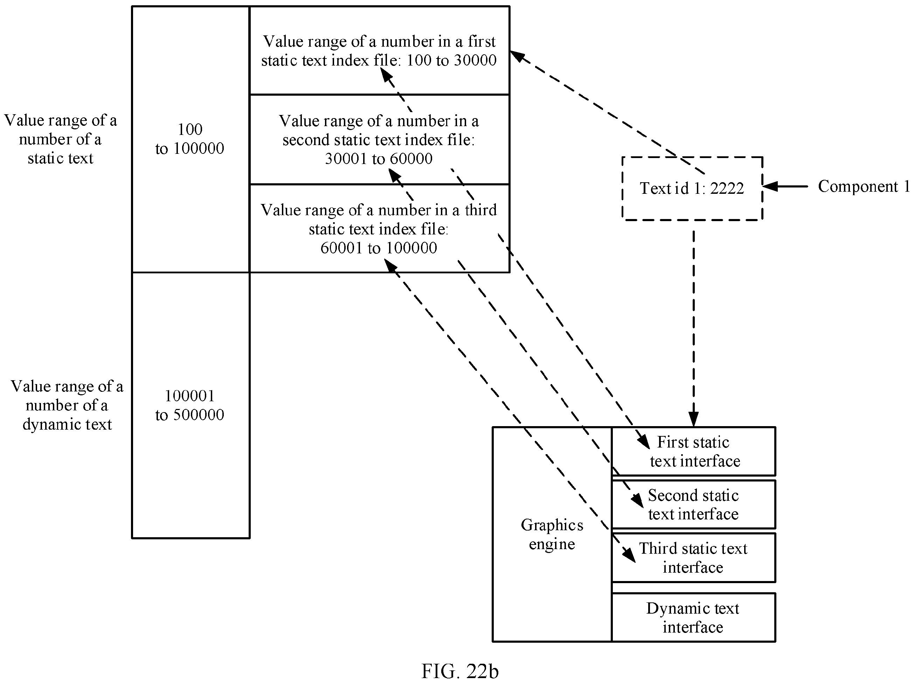

FIG. 22b is a schematic diagram of an example of invoking the static text interface by using the number of the static text according to an embodiment of this application. When there are a plurality of static text interfaces, the plurality of static text interfaces may respectively correspond to different static text index files. After determining that the number of the first static text falls within the value range of the number in the first static text index file, the lite device may invoke the first static text interface corresponding to the first static text index file.

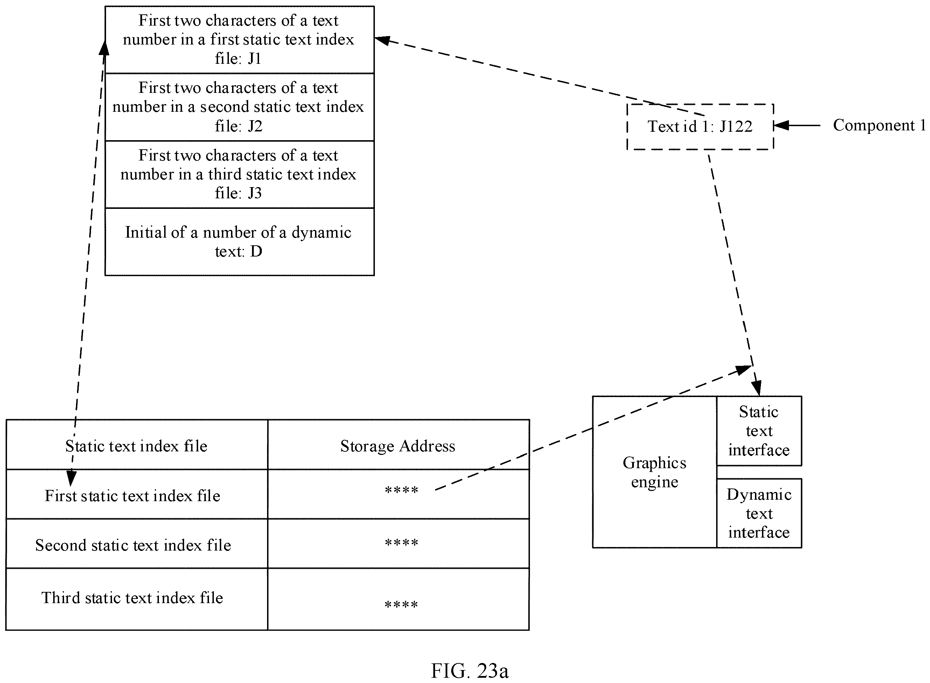

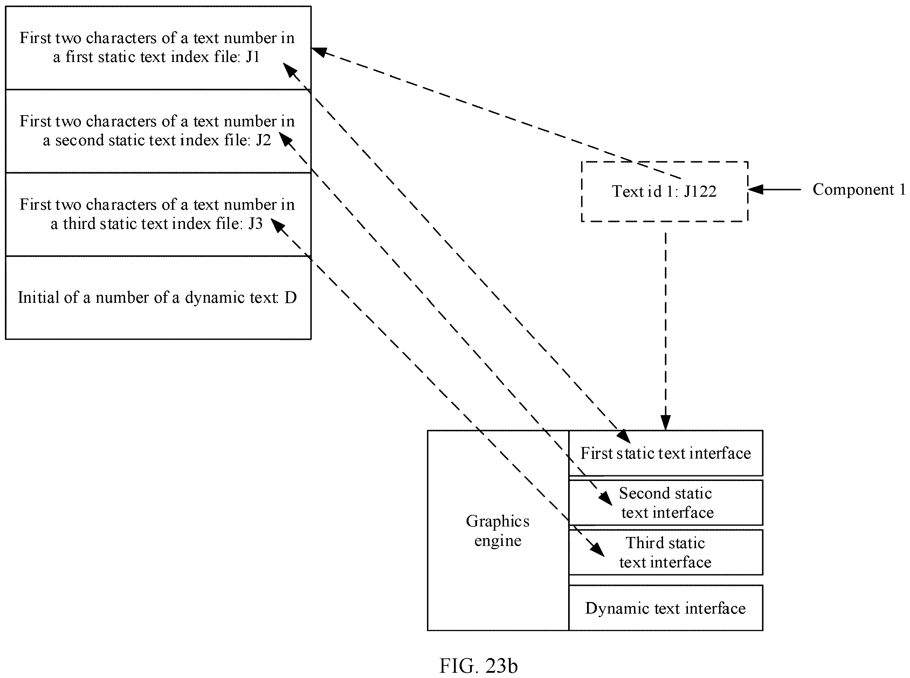

Optionally, text numbers carrying different parameters may be allocated to different text resource files, that is, corresponding static text glyph index files, based on the predetermined number plan. Which static text glyph index file is to be searched for the number of the first static text may be determined based on the parameter carried in the text number. As shown in FIG. 23a, the text id 1 includes a parameter J1. Therefore, the lite device may determine that the text id 1 corresponds to the first static text index file, and may invoke the static text interface by using the number of the first static text and the storage address of the first static text index file. As shown in FIG. 23b, the text id 1 includes the parameter J1. Therefore, the lite device may determine that the text id 1 corresponds to the first static text interface, and may invoke the first static text interface by using the number of the first static text.

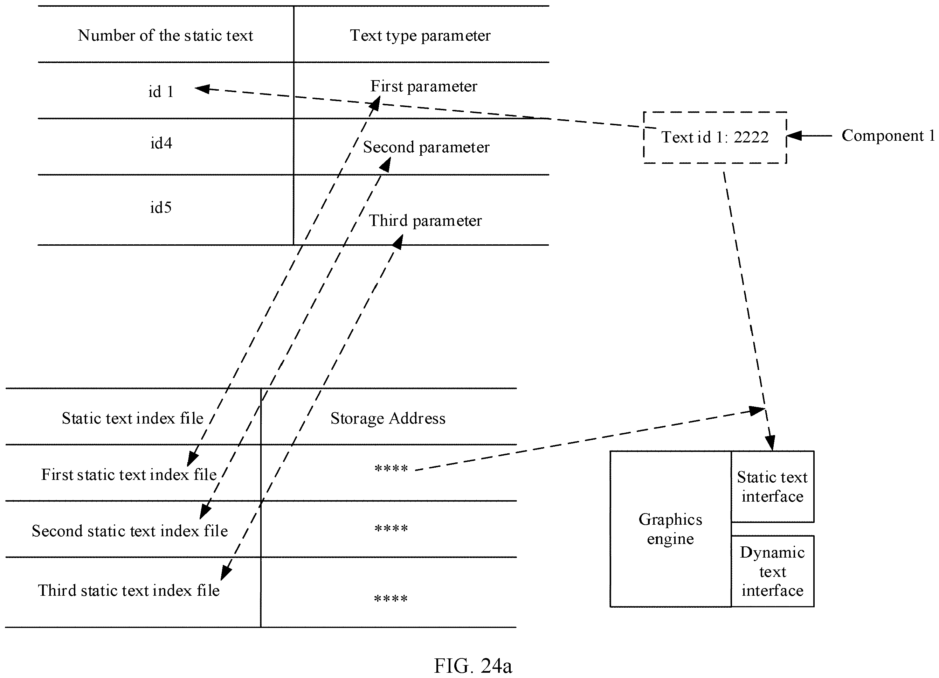

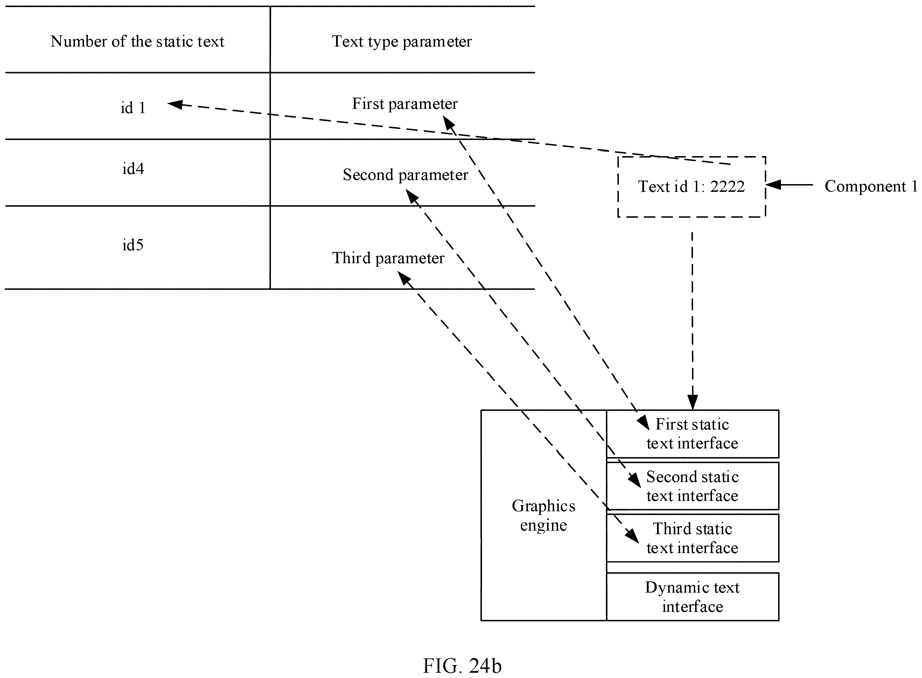

Optionally, the lite device may store a correspondence between the number of the static text and the text type parameter, and different text type parameters may correspond to different static text glyph index files. The lite device may search for the correspondence between the number of the static text and the text type parameter by using the number of the first static text, and determine the text type parameter corresponding to the number of the first static text, for example, the first parameter. Then, as shown in FIG. 24a, the static text interface is invoked by using the number of the first static text and the storage address of the first static text glyph index file corresponding to the first parameter. Alternatively, as shown in FIG. 24b, the first static text interface corresponding to the first parameter is invoked by using the number of the first static text.

It may be understood that the static text glyph index file corresponding to the number of the first static text may be searched in another manner. This is not limited herein.

S1603: The lite device searches a glyph index-based font library by using the first glyph index set, to obtain a first glyph set.

It may be understood that a glyph index-based font library used by the lite device is the same as a glyph index-based font library used when the compilation device performs shaping to generate the static text glyph index file.

The lite device may search the glyph index-based font library by using the first glyph index set, to obtain the first glyph set. The first glyph set is a glyph obtained after text content of the first static text is shaped.

S 1604: The lite device displays the first glyph set in the to-be-displayed component to which the number of the first static text is bound.

The lite device may display the first glyph set in the to-be-displayed component to which the number of the first static text is bound. If a glyph in the glyph set is a vector glyph, when displaying, the lite device may render and display the vector glyph. If the glyph in the glyph set is a dot-matrix glyph, when displaying, the lite device may directly display the dot-matrix glyph.

S 1605: The lite device determines a first dynamic text based on a number of the first dynamic text.

After determining that the text number bound to the to-be-displayed component is the number of the dynamic text, for example, the number of the first dynamic text, the lite device may determine the first dynamic text based on the number of the first dynamic text.

Specifically, the lite device may search the text resource file by using the number of the first dynamic text, to determine the first dynamic text corresponding to the number of the first dynamic text.

S1606: The lite device shapes the first dynamic text to generate a second glyph index set.

For a specific shaping process, refer to step S1304. Details are not described herein again.

S1607: The lite device searches the glyph index-based font library by using the second glyph index set, to obtain a second glyph set.

This step is similar to step S1604, and details are not described herein again.

S1608: The lite device displays the second glyph set in the to-be-displayed component to which the number of the first dynamic text is bound.

This step is similar to step S1605, and details are not described herein again.

In this embodiment of this application, the lite device may determine a corresponding shaped first glyph index set by using the number of the first static text that needs to be displayed; search the glyph index-based font library by using the first glyph index set, to obtain a correct first glyph set obtained after the first static text is shaped; and directly display the first glyph set. A glyph in a complex language can be correctly displayed without shaping a text in the complex language. This improves a capability of the lite device to support the complex language.

In conclusion, the foregoing embodiments are merely intended to describe the technical solutions of this application, but are not to limit this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of this application.

According to the context, the term "when" used in the foregoing embodiments may be interpreted as a meaning of "if", "after", "in response to determining", or "in response to detecting". Similarly, according to the context, the phrase "when it is determined that" or "if (a stated condition or event) is detected" may be interpreted as a meaning of "if it is determined that" or "in response to determining" or "when (a stated condition or event) is detected" or "in response to detecting (a stated condition or event)".

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, and microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the processes of the methods in embodiments may be implemented by a computer program instructing relevant hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

## Claims

1. A compilation method, comprising:
obtaining a text resource file, wherein the text resource file comprises a correspondence between a text number and a character string of a text;
performing text shaping on a character string of a first static text in the text resource file, to obtain a first glyph index set, wherein the text shaping is used to determine a correct glyph corresponding to a character in the character string of the text; and
generating, based on a correspondence between a number of the first static text and the character string of the first static text in the text resource file, a static text glyph index file that comprises a correspondence between the number of the first static text and the first glyph index set.

2. The method according to claim 1, wherein the method further comprises:
converting a vector font library into a glyph index-based font library, wherein the glyph index-based font library is used to search, by using a unique glyph index, for a glyph uniquely corresponding to the unique glyph index.

3. The method according to claim 1 or 2, wherein the performing text shaping on a character string of a first static text in the text resource file, to obtain a first glyph index set specifically comprises:
inputting a coded character set corresponding to the character string of the first static text into a text shaping algorithm library, to obtain the first glyph index set, wherein the text shaping algorithm library uses a first glyph index-based font library, the first glyph index set comprises one or more unique glyph indices, and each unique glyph index has a glyph uniquely corresponding to the unique glyph index in the first glyph index-based font library.

4. The method according to any one of claims 1 to 3, wherein before the step of performing text shaping on a character string of a first static text in the text resource file, to obtain a first glyph index set, the method further comprises:
determining a character string of a static text in the text resource file based on a first format character, wherein the character string of the static text comprises the character string of the first static text.

5. The method according to any one of claims 1 to 4, wherein the character string of the text in the text resource file comprises character strings of texts in a plurality of different language types, the first static text is a text in one complex language, and the complex language is of a language type in which one character corresponding to one coded character set has a plurality of glyphs; and
the generating, based on a correspondence between a number of the first static text and the character string of the first static text in the text resource file, a static text glyph index file that comprises a correspondence between the number of the first static text and the first glyph index set specifically comprises:
generating, based on a correspondence among the number of the first static text, a language type of the first static text, and the character string of the first static text in the text resource file, a static text glyph index file that comprises a correspondence among the number of the first static text, the language type of the first static text, and the first glyph index set.

6. A text display method, comprising:
determining, by a lite device, a first glyph index set based on a number of a first static text;
searching, by the lite device, a glyph index-based font library by using the first glyph index set, to obtain a first glyph set, wherein the glyph index-based font library is used to search, by using a unique glyph index, for a glyph uniquely corresponding to the unique glyph index; and
displaying, by the lite device, the first glyph set.

7. The method according to claim 6, wherein the lite device has only one static text glyph index file, and the static text glyph index file comprises a correspondence between the number of the first static text and the first glyph index set; and
the determining, by a lite device, a first glyph index set based on a number of a first static text specifically comprises:
searching, by the lite device, the static text glyph index file by using the number of the first static text, to determine the first glyph index set corresponding to the number of the first static text.

8. The method according to claim 7, wherein the searching, by the lite device, the static text glyph index file by using the number of the first static text, to determine the first glyph index set corresponding to the number of the first static text specifically comprises:
invoking, by the lite device, a static text interface of a graphics engine by using the number of the first static text, to determine the first glyph index set corresponding to the number of the first static text.

9. The method according to claim 6, wherein the lite device has a plurality of static text glyph index files, and different static text glyph index files store correspondences between numbers of different static texts and glyph index sets.

10. The method according to claim 9, wherein the determining, by a lite device, a first glyph index set based on a number of a first static text specifically comprises:
determining, by the lite device based on a value range plan or a parameter plan of a text number, that the number of the first static text belongs to a first static text glyph index file; and
searching, by the lite device, the first static text glyph index file by using the number of the first static text, to determine the first glyph index set corresponding to the number of the first static text.

11. The method according to claim 9, wherein the determining, by a lite device, a first glyph index set based on a number of a first static text specifically comprises:
searching, by the lite device, each static text glyph index file by using the number of the first static text, to determine that the number of the first static text belongs to a first static text glyph index file, and determine the first glyph index set corresponding to the number of the first static text.

12. The method according to claim 10 or 11, wherein the searching, by the lite device, the first static text glyph index file by using the number of the first static text, to determine the first glyph index set corresponding to the number of the first static text specifically comprises:
invoking, by the lite device, a first static text interface of a graphics engine by using the number of the first static text, to determine the first glyph index set corresponding to the number of the first static text, wherein the first static text interface is a static text interface that is in a plurality of static text interfaces of the graphics engine and that corresponds to the first static text glyph index file.

13. A compilation device, comprising an input apparatus, an output apparatus, a processor, and a memory, wherein
the memory is coupled to the processor, the memory is configured to store computer program code, the computer program code comprises computer instructions, and the processor invokes the computer instructions, so that the compilation device performs the following operations:
obtaining a text resource file, wherein the text resource file comprises a correspondence between a text number and a character string of a text;
performing text shaping on a character string of a first static text in the text resource file, to obtain a first glyph index set, wherein the text shaping is used to determine a correct glyph corresponding to a character in the character string of the text; and
generating, based on a correspondence between a number of the first static text and the character string of the first static text in the text resource file, a static text glyph index file that comprises a correspondence between the number of the first static text and the first glyph index set.

14. The compilation device according to claim 13, wherein the one or more processors are further configured to invoke the computer instructions, so that the compilation device performs the following operation:
converting a vector font library into a glyph index-based font library, wherein the glyph index-based font library is used to search, by using a unique glyph index, for a glyph uniquely corresponding to the unique glyph index.

15. The compilation device according to claim 13 or 14, wherein the one or more processors are specifically configured to invoke the computer instructions, so that the compilation device performs the following operation:
inputting a coded character set corresponding to the character string of the first static text into a text shaping algorithm library, to obtain the first glyph index set, wherein the text shaping algorithm library uses a first glyph index-based font library, the first glyph index set comprises one or more unique glyph indices, and each unique glyph index has a glyph uniquely corresponding to the unique glyph index in the first glyph index-based font library.

16. The compilation device according to any one of claims 13 to 15, wherein the one or more processors are further configured to invoke the computer instructions, so that the compilation device performs the following operation:
determining a character string of a static text in the text resource file based on a first format character, wherein the character string of the static text comprises the character string of the first static text.

17. The compilation device according to any one of claims 13 to 16, wherein the character string of the text in the text resource file comprises character strings of texts in a plurality of different language types, the first static text is a text in one complex language, the complex language is of a language type in which one character corresponding to one coded character set has a plurality of glyphs, and the one or more processors are specifically configured to invoke the computer instructions, so that the compilation device performs the following operation:
generating, based on a correspondence among the number of the first static text, a language type of the first static text, and the character string of the first static text in the text resource file, a static text glyph index file that comprises a correspondence among the number of the first static text, the language type of the first static text, and the first glyph index set.

18. A lite device, wherein the lite device comprises one or more processors, a memory, and a display; and the memory is coupled to the one or more processors, the memory is configured to store computer program code, the computer program code comprises computer instructions, and the one or more processors invoke the computer instructions, so that the lite device performs the following operations:
determining a first glyph index set based on a number of a first static text;
searching a glyph index-based font library by using the first glyph index set, to obtain a first glyph set, wherein the glyph index-based font library is used to search, by using a unique glyph index, for a glyph uniquely corresponding to the unique glyph index; and
displaying the first glyph set.

19. The lite device according to claim 18, wherein the lite device has only one static text glyph index file, and the static text glyph index file comprises a correspondence between the number of the first static text and the first glyph index set; and the one or more processors are specifically configured to invoke the computer instruction, so that the lite device performs the following operation:
searching the static text glyph index file by using the number of the first static text, to determine the first glyph index set corresponding to the number of the first static text.

20. The lite device according to claim 19, wherein the one or more processors are specifically configured to invoke the computer instructions, so that the lite device performs the following operation:
invoking a static text interface of a graphics engine by using the number of the first static text, to determine the first glyph index set corresponding to the number of the first static text.

21. The lite device according to claim 18, wherein the lite device has a plurality of static text glyph index files, and different static text glyph index files store correspondences between numbers of different static texts and glyph index sets.

22. The lite device according to claim 21, wherein the one or more processors are specifically configured to invoke the computer instructions, so that the lite device performs the following operations:
determining, based on a value range plan or a parameter plan of a text number, that the number of the first static text belongs to a first static text glyph index file; and
searching the first static text glyph index file by using the number of the first static text, to determine the first glyph index set corresponding to the number of the first static text.

23. The lite device according to claim 21, wherein the one or more processors are specifically configured to invoke the computer instructions, so that the electronic device performs the following operation:
searching each static text glyph index file by using the number of the first static text, to determine that the number of the first static text belongs to a first static text glyph index file, and determine the first glyph index set corresponding to the number of the first static text.

24. The lite device according to claim 22 or 23, wherein the one or more processors are specifically configured to invoke the computer instructions, so that the electronic device performs the following operation:
invoking a first static text interface of a graphics engine by using the number of the first static text, to determine the first glyph index set corresponding to the number of the first static text, wherein the first static text interface is a static text interface that is in a plurality of static text interfaces of the graphics engine and that corresponds to the first static text glyph index file.

25. A chip system, wherein the chip system is applied to a compilation device, the chip comprises one or more processors, and the processor is configured to invoke computer instructions, so that the compilation device performs the method according to any one of claims 1 to 5.

26. A computer program product comprising instructions, wherein when the computer program product runs on a compilation device, the compilation device is enabled to perform the method according to any one of claims 1 to 5.

27. A computer-readable storage medium, comprising instructions, wherein when the instructions are run on a compilation device, the compilation device is enabled to perform the method according to any one of claims 1 to 5.

28. A chip system, wherein the chip system is applied to a lite device, the chip comprises one or more processors, and the processor is configured to invoke computer instructions, so that the lite device performs the method according to any one of claims 6 to 12.

29. A computer program product comprising instructions, wherein when the computer program product runs on a lite device, the lite device is enabled to perform the method according to any one of claims 6 to 12.

30. A computer-readable storage medium, comprising instructions, wherein when the instructions are run on a lite device, the lite device is enabled to perform the method according to any one of claims 6 to 12.
